# EUROPÄISCHE PATENTSCHRIFT

(11) **EP 3 926 419 B1**
(45) Veröffentlichungstag und Bekanntmachung des Hinweises auf die Patenterteilung: **18.03.2026**
(21) Anmeldenummer: 20305670.0
(22) Anmeldetag: 19.06.2020
(51) Int. Cl.: G05B 9/02

(54) **SICHERHEITSGERICHTETES STEUERUNGSSYSTEM**
SAFETY-RELATED CONTROL SYSTEM
SYSTÈME DE COMMANDE DE SÉCURITÉ

(43) Veröffentlichungstag der Anmeldung: 22.12.2021
(73) Patentinhaber: Schneider Electric Industries SAS, 92500 Rueil Malmaison (FR)
(72) Erfinder: Bunsendal, Jens, 97070 Würzburg (DE); Lankl, Maximilian, 97907 Hasloch (DE); Maximilian Eugen, Stahl, 97842 Karbach (DE)
(74) Vertreter: Manitz Finsterwald Patent- und Rechtsanwaltspartnerschaft mbB

(56) Entgegenhaltungen:
- EP-A2- 2 302 472
- DE-B3- 102012 102 187

## Beschreibung

Die vorliegende Erfindung betrifft ein sicherheitsgerichtetes Steuerungssystem und ein Verfahren zum Betreiben eines sicherheitsgerichteten Steuerungssystems.

Sicherheitsgerichtete Steuerungssysteme werden in der Verfahrens- und Automatisierungstechnik dazu eingesetzt, gefahrbringende Anlagenteile abzusichern und so Personen- oder Materialschäden zu verhindern. Hierzu werden in der Regel sogenannte Sicherheitsfunktionen verwendet, welche mittels sicherheitsgerichteter Sensoren, beispielsweise mittels Not-Aus-Taster, Lichtschranken oder dergleichen, ausgelöst werden. Bei Ausführung der Sicherheitsfunktionen werden die gefahrbringenden Anlagenteile in einen sicheren Zustand überführt, beispielsweise stillgesetzt oder in einem sicheren, eine Gefährdung ausschließenden Parameterbereich betrieben. Das Überführen in den sicheren Zustand mittels der Sicherheitsfunktion stellt dabei eine sicherheitsgerichtete Reaktion bzw. eine Sicherheitsreaktion dar.

Das Ausführen der Sicherheitsfunktionen erfolgt in der Regel in derart abgesicherter Weise, dass Fehlfunktionen einen automatischen Rückfall in einen sicheren Zustand des gefahrbringenden Anlagenteils bewirken. Zulässige Sicherheitsfunktionen und deren Ausgestaltungen sind in verschiedenen nationalen und internationalen Normen festgeschrieben.

Zum Ausführen der Sicherheitsfunktionen weisen sicherheitsgerichtete Steuerungssysteme in der Regel neben den sicherheitsgerichteten Sensoren sicherheitsgerichtete Aktoren auf, welche die Sicherheitsreaktionen ausführen. Derartige Aktoren können beispielsweise als Schütze ausgebildet sein, welche eine Energiezufuhr zum gefahrbringenden Anlagenteil unterbrechen, oder als abgesicherte Antriebe, welche eine Lage und/oder Bewegung des gefahrbringenden Anlagenteils abgesichert auf einen sicheren Parameterbereich beschränken. Sicherheitsreaktionen, die unter anderem durch Antriebe ausgeführt werden können, sind beispielsweise ein ungesteuertes Stillsetzen (STO *- safe torque off* bzw. sicher abgeschaltetes Moment), ein Betrieb mit sicher begrenzter Geschwindigkeit (SLS - *safely limited speed*) oder ein sicher geregeltes Stillsetzen (*safe stop*).

Eine signaltechnische Verknüpfung der sicherheitsgerichteten Sensoren und Aktoren zur Ausführung von Sicherheitsfunktionen wird unter anderem mittels festverdrahteter Sicherheitsrelais realisiert, bei welchen die einzelnen Aktoren mit den zur Auslösung verwendeten Sensoren jeweils mittels separater Leitungen verbunden werden. Eine derartige Lösung ist jedoch sehr unflexibel und bedingt einen hohen Verdrahtungsaufwand. Zudem kann die Anlage nur mit hohem Aufwand in Bereiche mit unterschiedlichen Sicherheitsanforderungen und Sicherheitsreaktionen untergliedert werden.

Neben festverdrahteter Sicherheitsrelais ist auch eine Verwendung dedizierter Sicherheitssteuerungen möglich, welche mit den sicherheitsgerichteten Sensoren und Aktoren einer Anlage oder eines Anlagenbereichs beispielsweise über einen Feldbus verbunden sind und die sicherheitsgerichteten Aktoren auf Grundlage logischer Verknüpfungen von durch die sicherheitsgerichteten Sensoren bereitgestellten Eingangssignalen ansteuern. Derartige Sicherheitssteuerungen erfordern in der Regel eine aufwändige Programmierung und Validierung der logischen Verknüpfungen. Zudem benötigt die Datenübertragung zwischen der zentralen Sicherheitssteuerung einerseits und den sicherheitsgerichteten Sensoren und Aktoren andererseits einen Kommunikationskanal mit ausreichend großer Bandbreite.

Die Druckschriften EP 2 302 472 A2 und DE 10 2012 102 187 B3 beschreiben jeweils Steuerungssysteme zum Steuern von sicherheitskritischen Prozessen, bei denen sichere Netzwerkteilnehmer eine fehlersichere Kommunikation untereinander durchführen.

Es ist Aufgabe der Erfindung ein sicherheitsgerichtetes Steuerungssystem und ein Verfahren zum Betreiben eines sicherheitsgerichteten Steuerungssystems unter anderem dahingehend zu verbessern, dass Sicherheitsfunktionen einfach und sicher konfiguriert und ausgeführt werden können.

Diese Aufgabe wird durch ein sicherheitsgerichtetes Steuerungssystem und ein Verfahren zum Betreiben eines sicherheitsgerichteten Steuerungssystems gemäß den unabhängigen Ansprüchen gelöst. Weiterbildungen sind jeweils in den abhängigen Ansprüchen angegeben.

Es wird ein sicherheitsgerichtetes Steuerungssystem angegeben mit mindestens einer Sicherheitssensoreinheit und mindestens einer Sicherheitsaktoreinheit, welche über einen Feldbus miteinander verbunden sind, und mit einer Programmiereinrichtung. Durch die mindestens eine Sicherheitssensoreinheit werden Sensoranschlüsse zur Anbindung von Sicherheitssensoren an den Feldbus bereitgestellt, wobei die Sensoranschlüsse Sicherheitslinien zugeordnet sind. Die Programmiereinrichtung ist dazu eingerichtet, die verfügbaren Sicherheitslinien über eine Ausgabeschnittstelle einem Benutzer anzuzeigen und über eine Eingabeschnittstelle eine Benutzereingabe des Benutzers zu empfangen, wobei die Benutzereingabe mindestens einer ausgewählten Sicherheitslinie eine durch die Sicherheitsaktoreinheit ausführbare ausgewählte Sicherheitsreaktion zuordnet. Die Programmiereinrichtung ist ferner dazu eingerichtet, die Zuordnung zwischen der ausgewählten Sicherheitslinie und der ausgewählten Sicherheitsreaktion in der Sicherheitsaktoreinheit als Sicherheitskonfiguration zu hinterlegen. Die den einzelnen Sensoranschlüssen zugeordneten Sicherheitslinien sind durch die mindestens eine Sicherheitssensoreinheit mittels Aussenden von Linienaktivierungssignalen der einzelnen Sicherheitslinien eigenständig aktivierbar. Die Sicherheitsaktoreinheit ist dazu eingerichtet, die Linienaktivierungssignale über den Feldbus direkt von der mindestens einen Sicherheitssensoreinheit zu empfangen und bei Empfang eines Linienaktivierungssignals einer aktivierten Sicherheitslinie die für die aktivierte Sicherheitslinie in der Sicherheitskonfiguration hinterlegte Sicherheitsreaktion eigenständig auszuführen.

Bei einem derartigen sicherheitsgerichteten Steuerungssystem werden also die einzelnen Sicherheitsreaktionen der an den Feldbus angeschlossenen Sicherheitsaktoreinheit nicht durch eine zentrale Sicherheitssteuerung gesteuert, sondern von der mindestens einen Sicherheitssensoreinheit mittels der Sicherheitslinien über den Feldbus direkt in der Sicherheitsaktoreinheit ausgelöst. Dabei ist die für das Ausführen der Sicherheitsreaktionen notwendige Verknüpfungslogik in Form der Sicherheitskonfiguration dezentral in der Sicherheitsaktoreinheit hinterlegt und die Sicherheitsaktoreinheit führt die zugeordneten Sicherheitsreaktionen eigenständig, also ohne Mitwirkung einer zwischengeschalteten Steuereinheit, aus, wenn sie die Linienaktivierungssignale über den Feldbus unmittelbar von der mindestens einen Sicherheitssensoreinheit empfängt. Die durch die mindestens eine Sicherheitssensoreinheit über den Feldbus aktivierbaren Sicherheitslinien bilden also jeweils direkte feststehende Verdrahtungen oder Verknüpfungen zwischen der Sicherheitsaktoreinheit und den den einzelnen Sicherheitslinien jeweils zugeordneten Sensoranschlüssen der mindestens einen Sicherheitssensoreinheit.

Ein derartiges unmittelbares Auslösen von Sicherheitsreaktionen mittels vorkonfigurierter Sicherheitslinien über einen Feldbus reduziert die für die Implementierung der Sicherheitsreaktionen benötigte Bandbreite auf dem Feldbus, da für jede Sicherheitslinie lediglich ein einzelnes Linienaktivierungssignal über den Feldbus übertragen werden muss, welches dann direkt in grundsätzlich beliebig vielen Sicherheitsaktoreinheiten eine Sicherheitsreaktion auslösen kann. So ist es beispielsweise nicht notwendig, für jede Sicherheitsaktoreinheit, die von einer aktivierten Sicherheitslinie angesprochen wird, bzw. für jede Sicherheitsreaktion ein separates Ausgangssignal zu erzeugen und über den Feldbus zu übertragen.

Bei dem beanspruchten sicherheitsgerichteten Steuerungssystem können die durch die Sicherheitsaktoreinheit ausgeführten Sicherheitsreaktionen durch einfaches Konfigurieren der Sicherheitsaktoreinheit festgelegt werden, indem den einzelnen Sicherheitslinien jeweils Sicherheitsreaktionen der Sicherheitsaktoreinheit zugeordnet und anschließend als Sicherheitskonfiguration in der Sicherheitsaktoreinheit hinterlegt werden. Insofern kann ein aufwändiges Erstellen eines Steuerprogramms, welches sämtliche Sicherheitsreaktionen des sicherheitsgerichteten Steuerungssystems abbildet und beispielsweise für eine zentrale Sicherheitssteuerung benötigt werden würde, entfallen. Insofern reduziert sich also der Aufwand und die Fehleranfälligkeit bei der Inbetriebnahme des Steuerungssystems. Außerdem verringert sich der Wartungsaufwand im laufenden Betrieb, da bei Änderungen an dem sicherheitsgerichteten Steuerungssystem, beispielsweise beim Hinzufügen oder Entfernen einzelner Sicherheitsaktoreinheiten oder Sicherheitssensoreinheiten, lediglich einzelne Konfigurationen geändert werden müssen, nicht jedoch ein komplexes Steuerprogramm.

Das Ausgeben der verfügbaren Sicherheitslinien über die Ausgabeschnittstelle der Programmiereinrichtung und das Konfigurieren der Sicherheitsreaktion zur Zuordnung von Sicherheitsreaktion und Sicherheitslinie mittels einer Benutzereingabe über die Eingabeschnittstelle haben den technischen Effekt, dass eine Benutzerschnittstelle bereitgestellt wird, welche ein einfaches und sicheres Konfigurieren der Sicherheitsreaktion ermöglicht. So bildet eine derartige Benutzerschnittstelle das dem Fachmann bereits bekannte separate Verdrahten eines Sicherheitsrelais mit einzelnen Sicherheitssensoren nach und ist damit in besonderer Weise an das dem Fachmann geläufige Konzept einzelner Sicherheitskreise angepasst. Dies ermöglicht es auch ungeübten Benutzern, das Steuerungssystem schnell und einfach sicherheitsgerichtet zu konfigurieren.

Beispielsweise bilden die über die Ausgabeschnittstelle angezeigten Sicherheitslinien einzelne Sicherheitskreise nach, an die der Benutzer die Sicherheitsaktoreinheit mittels der über die Eingabeschnittstelle empfangenen Benutzereingabe "anklemmen" kann. Dabei ergeben sich dadurch erweiterte Konfigurationsmöglichkeiten gegenüber einer Festverdrahtung, dass der Sicherheitslinie eine beliebige durch die Sicherheitsaktoreinheit ausführbare Sicherheitsreaktion zugeordnet werden kann. Eine derartige Sicherheitsreaktion kann beispielsweise auch eine sicher begrenzte Geschwindigkeit (SLS) oder ein sicher geregeltes Stillsetzen (SS1/SS2) umfassen und ist damit nicht auf ein sicheres ungeregeltes Abschalten (STO) beschränkt, wie es beispielsweise bei einem einfachen Sicherheitsrelais der Fall wäre.

Das sicherheitsgerichtete Steuerungssystem kann neben der beanspruchten Sicherheitsaktoreinheit weitere Sicherheitsaktoreinheiten umfassen, welche mit dem Feldbus verbunden sind und auf die gleiche Weise konfiguriert werden, wie die beanspruchte Sicherheitsaktoreinheit. Dabei kann die Programmiereinrichtung für jede Sicherheitsaktoreinheit mindestens eine Benutzereingabe über die Eingabeschnittstelle empfangen, welche mindestens einer Sicherheitslinie eine durch die betreffende Sicherheitsaktoreinheit ausführbare ausgewählte Sicherheitsreaktion zuordnet, und die einzelnen Zuordnungen zwischen den Sicherheitslinien und den Sicherheitsreaktionen können in den einzelnen Sicherheitsaktoreinheiten jeweils als Sicherheitskonfigurationen hinterlegt werden. Hierbei können sich die den einzelnen Sicherheitsaktoreinheiten zugeordneten Sicherheitsreaktionen voneinander unterscheiden.

Die beanspruchte mindestens eine Sicherheitssensoreinheit kann einen einzelnen Sensoranschluss oder mehrere Sensoranschlüsse aufweisen. Insbesondere in Fällen, in denen die beanspruchte mindestens eine Sicherheitssensoreinheit nur einen einzelnen Sensoranschluss aufweist, aber auch in allen anderen Fällen, kann das sicherheitsgerichtete Steuerungssystem neben der beanspruchten mindestens einen Sicherheitssensoreinheit weitere Sicherheitssensoreinheiten umfassen. Dabei weisen die einzelnen Sicherheitssensoreinheiten jeweils mindestens einen sicheren Sensoranschluss zum Anschluss von Sicherheitssensoren an den Feldbus auf, wobei es sich bei den Sicherheitssensoren beispielsweise um Not-Aus-Taster, Lichtschranken, Lichtgitter, Temperatursensoren oder dergleichen handeln kann. Die Sicherheitssensoreinheiten setzen dann Sensorsignale der Sicherheitssensoren in die Linienaktivierungssignale um, senden also beim Auslösen eines an einen ihrer sicheren Sensoranschlüsse angeschlossenen Sicherheitssensors das dem Sensoranschluss zugeordnete Linienaktivierungssignal über den Feldbus.

Die einzelnen Sensoranschlüsse der an den Feldbus angeschlossenen Sicherheitssensoreinheiten können jeweils unterschiedlichen Sicherheitslinien zugeordnet sein. Alternativ können aber auch mehrere Sensoranschlüsse der an den Feldbus angeschlossenen Sicherheitssensoreinheiten einer einzelnen Sicherheitslinie zugeordnet sein, sodass das der einzelnen Sicherheitslinie zugeordnete Linienaktivierungssignal über den Feldbus ausgesendet wird, unabhängig davon, welcher der an die mehreren Sensoranschlüsse angeschlossenen Sicherheitssensoren aktiviert wird. Sensoranschlüsse, die der gleichen Sicherheitslinie zugeordnet sind, können in einer einzelnen Sicherheitssensoreinheit ausgebildet sein oder aber jeweils in unterschiedlichen Sicherheitssensoreinheiten.

Eine Zuordnung einzelner Sensoranschlüsse zu den Sicherheitslinien kann dabei vom Sensortyp und/oder von der räumlichen Anordnung der an die einzelnen Sensoranschlüsse angeschlossenen Sicherheitssensoren abhängen. Beispielsweise können alle Sensoranschlüsse, an die Sicherheitssensoren gleichen Sensortyps, beispielsweise Not-Aus-Taster, angeschlossen sind und/oder Sensoranschlüsse, deren Sicherheitssensoren den gleichen Schutzbereich absichern, und/oder Sensoranschlüsse, die an der gleichen Sicherheitssensoreinheit ausgebildet sind, der gleichen Sicherheitslinie zugeordnet werden.

Die einzelnen Sensoranschlüsse der an den Feldbus angeschlossenen Sicherheitssensoreinheiten können jeweils genau einer Sicherheitslinie zugeordnet sein. Alternativ können einzelne Sensoranschlüsse auch mehreren Sicherheitslinien zugeordnet sein, so dass bei einem Aktivieren der an die betreffenden Sensoranschlüsse angeschlossenen Sicherheitssensoren mehr als ein Linienaktivierungssignal über den Feldbus ausgesendet wird.

Das Linienaktivierungssignal kann als ein binäres Signal über den Feldbus übertragen werden. Ein derartiges binäres Linienaktivierungssignal gibt auf besonders einfache und datensparende Art und Weise an, ob die zugehörige Sicherheitslinie aktiviert wurde oder nicht.

Die mindestens eine Sicherheitssensoreinheit kann dazu ausgebildet sein, eine fehlersichere Vorverarbeitung von über einen sicheren Sensoranschluss empfangenen Sicherheitssensordaten auszuführen, um zu entscheiden, ob die Sicherheitslinie, der der sichere Sensoranschluss zugeordnet ist, zu aktivieren und das entsprechende Linienaktivierungssignal auszusenden ist. Die Sicherheitssensordaten können beispielsweise analoge oder digitale Daten sein. Die Sicherheitssensordaten können innerhalb eines Datenbereichs variieren, der mehr als zwei Zustände umfasst. Beispielsweise können die Sicherheitssensordaten eine Geschwindigkeit oder Drehzahl einer durch das sicherheitsgerichtete Steuerungssystem beeinflussten Maschine sein.

Die Sicherheitssensordaten können bei der fehlersicheren Vorverarbeitung anhand eines Kriteriums oder anhand mehrerer Kriterien, etwa anhand eines Schwellenwerts oder anhand mehrerer Schwellenwerte, daraufhin überprüft werden, ob sie in einem sicheren Wertebereich liegen und die Sicherheitslinie kann aktiviert werden, wenn die Sicherheitssensordaten außerhalb des sicheren Wertebereichs liegen. Bei dem sicheren Wertebereich kann es sich beispielsweise um einen vorgegebenen zulässigen Geschwindigkeits- oder Drehzahlbereich der gesteuerten Maschine handeln. Die Vorverarbeitung kann beispielsweise dadurch fehlersicher erfolgen, dass sie redundant ausgeführt wird.

Die fehlersichere Vorverarbeitung der Sicherheitssensordaten kann auch eine Fehlerprüfung eines die Sicherheitssensordaten erzeugenden Schaltkreises umfassen. Eine derartige Fehlerprüfung kann beispielsweise eine Kurzschlussprüfung oder eine Erdschlussprüfung umfassen. In diesem Fall kann der sichere Wertebereich beispielsweise durch einen sicheren Widerstands- oder Impedanzbereich des Schaltkreises gebildet werden. Die Fehlerprüfung kann auch eine Funktionsprüfung eines in dem Schaltkreis vorhandenen Sicherheitssensors umfassen, wobei der sichere Wertebereich durch eine Funktionsfähigkeit des Sicherheitssensors anzeigende Sicherheitssensordaten gebildet wird.

Die Sicherheitsaktoreinheiten dienen zum Anschluss sicherer Aktoren an den Feldbus, wobei die sicheren Aktoren beispielsweise Antriebe, Relais, Ventile oder dergleichen sein können. Die Sicherheitsaktoreinheiten steuern die Sicherheitsaktoren gemäß der über den Feldbus empfangener Steuersignale an und versetzen dabei die Aktoren bei Empfang eines Linienaktivierungssignals in einen sicheren Zustand, der durch die dem Linienaktivierungssignal zugeordnete Sicherheitsreaktion definiert ist.

Die Sicherheitsaktoreinheiten können zum Ausführen der Sicherheitsreaktion ein fehlersicheres, beispielswiese redundant ausgeführtes, Sicherheitsmodul aufweisen. Das Sicherheitsmodul kann von einem durch eine Standardsteuereinheit des sicherheitsgerichteten Steuerungssystems gesteuerten nicht fehlersicheren Standardmodul der Sicherheitsaktoreinheit sicherheitstechnisch getrennt ausgebildet sein. Das fehlersichere Sicherheitsmodul kann beispielsweise mittels fehlersicherer Hardware und/oder mittels fehlersicherer Software ausgebildet sein.

Das Sicherheitsmodul kann die Linienaktivierungssignale eigenständig und unabhängig von dem Standardmodul von der mindestens einen Sicherheitssensoreinheit über den Feldbus empfangen. Das Sicherheitsmodul kann beispielsweise eine eigene Feldbusadresse aufweisen und/oder mittels einer eigenen Busanschaltung an den Feldbus angeschlossen sein. Die Sicherheitsreaktion kann beinhalten, dass das Sicherheitsmodul innerhalb der Sicherheitsaktoreinheit durch das Standardmodul ausgegebene Ausgangssignale fehlersicher überwacht. Bei einer sicherheitskritischen Abweichung der Ausgangssignale von einem sicheren Signalparameterbereich kann das Sicherheitsmodul dann den zugehörigen Ausgang in einen sicheren Zustand versetzen, beispielsweise abschalten.

Der Feldbus kann ein Ethernet-basierter Feldbus, beispielsweise ein echtzeitfähiger Ethernet-basierter Feldbus, beispielsweise ein SERCOS-Feldbus, etwa ein SERCOS-III-Feldbus sein. Der Feldbus kann auch als ein UPC UA over TSN Netzwerk ausgebildet sein.

Die Sicherheitssensoreinheiten und die Sicherheitssensoren, sowie die Sicherheitsaktoreinheiten und die Sicherheitsaktoren können jeweils fehlersicher (*fail safe*) ausgebildet sein, beispielsweise mittels Diversität, Redundanz und/oder unter Ausnutzung des Ruhestromprinzips. Die Übertragung der Linienaktivierungssignale über den Feldbus kann mittels eines fehlersicheren Übertragungsprotokolls, beispielsweise mittels des *CIP safety,* erfolgen. Das fehlersichere Übertragungsprotokoll kann Maßnahmen zur Absicherung der über den Feldbus übertragenen Datensignale implementieren, beispielsweise Zeitstempel und Zeiterwartung, Nachrichten-IDs, Sicherheits-Prüfsummen, redundante Nachrichten oder dergleichen.

Die Programmiereinrichtung kann über den Feldbus mit den Sicherheitssensoreinheiten und den Sicherheitsaktoreinheiten verbunden sein. Dabei kann die Programmiereinrichtung direkt in den Feldbus angeschlossen oder über eine zentrale Steuereinheit, beispielsweise eine nicht sichere Standardsteuereinheit, mit dem Feldbus verbunden sein. Die Programmiereinrichtung kann dazu eingerichtet sein, die Sicherheitskonfigurationen mittels Übertragung über den Feldbus in den Sicherheitsaktoreinheiten zu hinterlegen.

Die Programmiereinrichtung kann als ein Softwaremodul ausgeführt sein, welches auf einer mit dem Feldbus verbundenen Datenverarbeitungseinheit, etwa einem Computer, ausgeführt wird. Die Programmiereinrichtung kann als Softwaremodul aber auch auf einer Standardsteuereinheit des Steuerungssystems ausgeführt werden. Die Ausgabeschnittstelle und/oder die Eingabeschnittstelle können physische Schnittstellen sein, etwa zum Anschluss eines Anzeigegeräts. etwa eines Bildschirms, bzw. einer Eingabeeinrichtung, etwa einer Tastatur. Die Ausgabeschnittstelle und/oder die Eingabeschnittstelle können auch Fernzugriffsschnittstellen, etwa Netzwerkschnittstellen sein, auf die mittels eines separaten Benutzergeräts über ein Netzwerk zugegriffen werden kann.

Die Programmiereinrichtung kann dazu eingerichtet sein, die an den Feldbus angeschlossenen Sicherheitssensoreinheiten direkt über den Feldbus abzufragen. Sie kann Informationen zu den verfügbaren Sicherheitssensoreinheiten jedoch auch von einer anderen an den Feldbus angeschalteten Einheit, beispielsweise einer nicht sicheren Standardsteuereinheit oder einer Mastereinheit, empfangen. Die Programmiereinrichtung kann dazu eingerichtet sein, außer den verfügbaren Sicherheitslinien auch die durch die Sicherheitsaktoreinheit ausführbaren Sicherheitsreaktionen über die Ausgabeschnittstelle anzuzeigen, beispielsweise als mit den einzelnen Sicherheitslinien verknüpfte Auswahllisten.

Gemäß einer Ausführungsform sind die durch die Sicherheitsaktoreinheit ausführbaren Sicherheitsreaktionen in der Sicherheitsaktoreinheit hinterlegt und von der Programmiereinrichtung zur Auswahl durch den Benutzer abrufbar, beispielsweise über den Feldbus. Dadurch kann auf einfache und sichere Weise sichergestellt werden, dass der Benutzer lediglich Sicherheitsreaktionen auswählt, die durch die angeschlossene Sicherheitsaktoreinheit auch ausführbar sind. Bei alternativen Ausführungsformen können die Sicherheitsreaktionen auch in der Programmiereinrichtung selbst hinterlegt sein. Unabhängig vom Ort der Hinterlegung können die Sicherheitsreaktionen jeweils in einer Datenbank hinterlegt sein.

Gemäß einer Ausführungsform sind die durch die Benutzereingabe auswählbaren Sicherheitsreaktionen der Sicherheitsaktoreinheit als parametrierbare Programmbausteine hinterlegt. Das Hinterlegen der Sicherheitsreaktionen als parametrierbare Programmbausteine ermöglicht eine besonders sichere und effiziente Erstellung der Sicherheitskonfigurationen, da lediglich einzelne Parameter durch den Benutzer veränderbar sind und sicherheitstechnisch überprüft werden müssen. Die Programmbausteine können zur weiteren Erhöhung der Sicherheit abgesichert hinterlegt sein, beispielsweise mittels einer Prüfsumme. Dadurch können sicherheitsgefährdende Veränderungen an den Programmbausteinen erkannt und verhindert werden. Zusätzlich können die Programmbausteine dazu eingerichtete sein, lediglich in vorgegebenen sicheren Parameterbereichen parametriert zu werden. Die Parameterbereiche können dabei, wie die Programmbausteine selbst, abgesichert hinterlegt sein.

Gemäß einer Ausführungsform ist die Programmiereinrichtung dazu eingerichtet, nach Auswahl der Sicherheitsreaktion dem Benutzer über die Ausgabeschnittstelle durch den Benutzer veränderbare Konfigurationsparameter der ausgewählten Sicherheitsreaktion anzuzeigen und über die Eingabeschnittstelle eine weitere Benutzereingabe zu empfangen, wobei die weitere Benutzereingabe der ausgewählten Sicherheitsreaktion mindestens einen der angezeigten Konfigurationsparameter zuweist. Dies ermöglicht ein besonders einfaches und sicheres Konfigurieren der Sicherheitsreaktion.

Die Programmiereinrichtung ist dazu eingerichtet, über die Eingabeschnittstelle eine Benutzereingabe zur Auswahl der an den Feldbus angeschlossenen Sicherheitsaktoreinheit zu empfangen und dem Benutzer die verfügbaren Sicherheitslinien und die durch die ausgewählte Sicherheitsaktoreinheit ausführbaren Sicherheitsreaktionen über die Ausgabeschnittstelle anzuzeigen. Mittels der Benutzereingabe zur Auswahl der Sicherheitsaktoreinheit kann die Sicherheitsaktoreinheit beispielsweise unter allen an den Feldbus angeschlossenen Sicherheitsaktoreinheiten ausgewählt werden. Dies ermöglicht ein einfaches und übersichtliches Konfigurieren der Sicherheitsaktoreinheiten. Indem dem Benutzer nach der Auswahl die verfügbaren Sicherheitslinien und die durch die ausgewählte Sicherheitsaktoreinheit ausführbaren Sicherheitsreaktionen in der Ausgabeschnittstelle angezeigt werden, wird ein einfaches und fehlerfreies Zuordnen der Sicherheitsreaktionen zu den einzelnen Sicherheitslinien ermöglicht und die Fehleranfälligkeit des Konfigurierens weiter verringert.

Gemäß einer Ausführungsform ist die Programmiereinrichtung dazu eingerichtet, über die Eingabeschnittstelle Benutzereingaben zur Programmierung eines nicht sicheren Standardsteuerprogramms einer an den Feldbus angeschlossenen nicht sicheren Standardsteuereinheit zu empfangen, wobei die Programmiereinrichtung ferner dazu eingerichtet ist, die Programmierung des Standardsteuerprogramms und eine Sicherheitskonfigurierung zur Erstellung der Sicherheitskonfiguration mittels getrennter Programmiermodule auszuführen und/oder in getrennten Ausgabebereichen über die Ausgabeschnittstelle anzuzeigen.

Eine Programmierung des Standardsteuerprogramms über die auch zur Sicherheitskonfigurierung verwendete Programmiereinrichtung vereinfacht die gesamte Konfigurierung des sicherheitsgerichteten Steuerungssystems. In dem die Programmierung des Standardsteuerprogramms und die Sicherheitskonfigurierung in getrennten Programmiermodulen ausgeführt bzw. in getrennten Ausgabebereichen angezeigt wird, wird eine Trennung von sicherheitsunkritischer Programmierung und sicherheitsrelevanter Sicherheitskonfigurierung erreicht und so die Sicherheit beim Konfigurieren des gesamten Steuerungssystems erhöht.

Die Sicherheitskonfigurierung kann mittels eines Sicherheitsprogrammiermoduls erfolgen, welches die Auswahl und/oder Parametrierung der Sicherheitsreaktionen sicherheitstechnisch überprüft und beispielsweise die zur Sicherheitskonfigurierung verwendeten parametrierbaren Programmbausteine überprüft und validiert. Die getrennten Ausgabebereiche können beispielsweise getrennte Anzeigeelemente, wie Fenster, Tabulatoren oder dergleichen sein, welche beispielsweise ausschließlich wechselseitig anzeigbar sein können.

Die Programmiereinrichtung ist dazu eingerichtet, die ausgewählte Sicherheitsreaktion erst dann in der Sicherheitsaktoreinheit zu hinterlegen, wenn die Programmiereinrichtung zu jeder Sicherheitslinie eine Benutzereingabe mit einer benutzerdefinierten Auswahl empfangen hat. Dadurch kann sichergestellt werden, dass für jede Sicherheitslinie ein Verhalten der Sicherheitsaktoreinheit vorbestimmt wird und während des Betriebs des sicherheitsgerichteten Steuerungssystems keine undefinierten Zustände auftreten können. Die benutzerdefinierte Auswahl kann beispielsweise eine Sicherheitsreaktion festlegen. Erfindungsgemäß kann die benutzerdefinierte Auswahl auch bestimmen, dass keine Sicherheitsreaktion erfolgen soll, die Sicherheitsaktoreinheit also nicht mit der betreffenden Sicherheitslinie verknüpft werden soll.

Gemäß einer Ausführungsform ist eine Zuordnung eines Sensoranschlusses oder mehrerer Sensoranschlüsse der Sicherheitssensoreinheit zu den Sicherheitslinien in der Sicherheitssensoreinheit hinterlegt. Allgemein kann die Zuordnung jedes einzelnen Sensoranschlusses zu den Sicherheitslinien jeweils in der den betreffenden Sensoranschluss umfassenden Sicherheitssensoreinheit hinterlegt sein. Dadurch kann zuverlässig und ohne Notwendigkeit eines Benutzereingriffs sichergestellt werden, dass jedem Sensoranschluss eine Sicherheitslinie zugeordnet ist, welche bei der anschließenden Sicherheitskonfigurierung dann auch angezeigt wird. Die Programmiereinrichtung kann dazu ausgebildet sein, die hinterlegten Sicherheitslinien von den Sicherheitssensoreinheiten abzufragen, beispielsweise über den Feldbus, etwa direkt über den Feldbus oder über eine an den Feldbus angeschlossene und mit der Programmiereinrichtung in Verbindung stehende Standardsteuereinheit oder Mastereinheit.

Indem die Zuordnung des Sensoranschlusses zur Sicherheitslinie in der Sicherheitssensoreinheit hinterlegt wird, können die einzelnen Sicherheitssensoreinheiten zudem vorkonfiguriert bereitgestellt und/oder ausgeliefert werden. Das sicherheitsgerichtete Steuerungssystem, die Sicherheitssensoreinheit und/oder die Sicherheitsaktoreinheit können dazu ausgebildet sein, die Sicherheitslinien nach Anschluss der Sicherheitssensoreinheit und der Sicherheitsaktoreinheit an den Feldbus eigenständig und automatisiert, insbesondere ohne Notwendigkeit einer Benutzereingabe, in Betrieb zu nehmen. Dies kann dadurch ermöglicht werden, dass in der Sicherheitssensoreinheit die Zuordnung der Sensoranschlüsse zu den einzelnen Sicherheitslinien hinterlegt ist und in der Sicherheitsaktoreinheit die den einzelnen Sicherheitslinien bzw. Linienaktivierungssignalen zugeordneten Sicherheitsreaktionen als Sicherheitskonfigurationen hinterlegt sind.

Die Programmiereinrichtung kann dazu ausgebildet sein, die in der Sicherheitssensoreinheit hinterlegt Zuordnung zwischen Sensoranschlüssen und Sicherheitslinien auf Grundlage von Benutzereingaben zu ändern. Hierzu kann die Programmiereinrichtung dazu ausgebildet sein, die einzelnen Sensoranschlüsse der an den Feldbus angeschlossenen Sicherheitssensoreinheiten mittels eindeutiger Kennungen über die Ausgabeschnittstelle darzustellen. Derartige eindeutige Kennungen können beispielsweise jeweils eine Teilkennung, die eine der Sicherheitssensoreinheiten bezeichnet, und eine weitere Teilkennung, welche einen einzelnen Sensoranschluss der betreffenden Sicherheitssensoreinheit bezeichnet, umfassen.

Die Sicherheitssensoreinheit und die Programmiereinrichtung können dazu ausgebildet sein, die in der Sicherheitssensoreinheit hinterlegten Zuordnungen der einzelnen Sensoranschlüsse zu den Sicherheitslinien über den Feldbus an die Programmiereinrichtung zu übertragen. Dies kann beispielsweise erfolgen, sobald eine Verbindung zwischen der Sicherheitssensoreinheit und der Programmiereinrichtung über den Feldbus hergestellt worden ist. Die Programmiereinrichtung kann dazu ausgebildet sein, eine geänderte Zuordnung der einzelnen Sensoranschlüsse einer Sicherheitssensoreinheit zu den Sicherheitslinien in der betroffenen Sicherheitssensoreinheit mittels Übertragung über den Feldbus zu hinterlegen. Die geänderte Zuordnung der einzelnen Sensoranschlüsse zu den Sicherheitslinien kann beispielsweise auf Grundlage einer Benutzereingabe, etwa über die Eingabeschnittstelle, erfolgt sein.

Das sicherheitsgerichtete Steuerungssystem kann dazu ausgebildet sein, bei Inbetriebnahme einen Abgleich zwischen den in den einzelnen Sicherheitssensoreinheiten hinterlegten Zuordnungen der Sensoranschlüsse zu den einzelnen Sicherheitslinien und benutzerdefinierten Zuordnungen der Sensoranschlüsse zu den einzelnen Sicherheitslinien auszuführen. Eine derartige benutzerdefinierte Zuordnung der Sensoranschlüsse zu den einzelnen Sicherheitslinien kann auch als Linienkonfiguration bezeichnet werden. Die Linienkonfiguration kann beispielsweise zuvor mittels der Programmiereinrichtung erstellt worden sein. Die Linienkonfiguration kann zentral in dem sicherheitsgerichteten Steuerungssystem hinterlegt sein, beispielsweise in einer an den Feldbus angeschlossenen Steuereinheit, etwa in einer an den Feldbus angeschlossenen Standardsteuereinheit, oder in der mit dem Feldbus verbundenen Programmiereinrichtung. Beispielsweise kann die Linienkonfiguration in einem Steuerprogramm der Steuereinheit, beispielsweise einem Standardsteuerprogramm der Steuereinheit, hinterlegt sein.

Falls bei dem Abgleich eine Abweichung der in den einzelnen Sicherheitssensoreinheiten hinterlegten Zuordnungen von der Linienkonfiguration festgestellt wird, kann ein Umkonfigurieren der in den einzelnen Sicherheitssensoreinheiten hinterlegten Zuordnungen der einzelnen Sensoranschlüsse zu den Sicherheitslinien erfolgen. Der Abgleich und/oder das Umkonfigurieren kann beispielsweise durch die Steuereinheit, beispielsweise die Standardsteuereinheit, oder eine die Kommunikation auf dem Feldbus steuernde Mastereinheit erfolgen. Bei dem Umkonfigurieren können die in den einzelnen Sicherheitssensoreinheiten hinterlegten Zuordnungen auf die in der Linienkonfiguration zentral gespeicherten Zuordnung der Sensoranschlüsse der einzelnen Sicherheitssensoreinheiten zu den Sicherheitslinien geändert werden.

Die in der mindestens einen Sicherheitsaktoreinheit hinterlegte Sicherheitskonfiguration kann auch die Zuordnung der einzelnen Sicherheitssensoreinheiten und/oder deren Sensoranschlüsse zu den einzelnen Sicherheitslinien umfassen. Die Sicherheitsaktoreinheit kann dazu ausgebildet sein, die Kommunikationsverbindung zu den einzelnen Sicherheitssensoreinheiten, die in der Sicherheitsaktoreinheit eine Sicherheitsreaktion auslösen können, über den Feldbus zu überwachen, beispielsweise durch den Empfang von durch die Sicherheitssensoreinheiten periodisch gesendeter und von der Sicherheitsaktoreinheit erwarteter Informationen. Ferner kann die Sicherheitsaktoreinheit dazu ausgebildet sein, bei einer Störung der Kommunikationsverbindung zu einer der Sicherheitssensoreinheiten diejenigen Sicherheitsreaktionen auszuführen, die für die von der betreffenden Sicherheitssensoreinheit auslösbaren Sicherheitslinien hinterlegt sind.

Gemäß einer alternativen Ausführungsform ist die Programmiereinrichtung dazu eingerichtet, die einzelnen Sicherheitssensoreinheiten bei Anschluss an den Feldbus selbsttätig zu erkennen und jeder erkannten Sicherheitssensoreinheit selbsttätig je eine Sicherheitslinie zuzuordnen. In diesem Fall können die einzelnen Sicherheitssensoreinheiten auch ohne hinterlegte Zuordnung der Sensoranschlüsse zu einzelnen Sicherheitslinien ausgeführt sein. Eine Zuordnung der Sensoranschlüsse zu den Sicherheitslinien in der Programmiereinrichtung ermöglicht es, die Sicherheitslinien besonders flexibel den einzelnen Sensoranschlüssen zuzuordnen und beispielsweise die Zuordnung in Abhängigkeit von den einzelnen an den Feldbus angeschlossenen Sicherheitssensoreinheiten oder Sicherheitssensoren auszuführen.

Gemäß einer Ausführungsform weist die mindestens eine Sicherheitssensoreinheit eine Mehrzahl von sicheren Sensoranschlüssen zum Anschluss von Sicherheitssensoren auf, wobei jedem Sensoranschluss eine eigene Sicherheitslinie zugeordnet ist, und wobei die Sicherheitssensoreinheit dazu eingerichtet ist, bei Betätigung der einzelnen Sicherheitssensoren jeweils ein separates Linienaktivierungssignal über den Feldbus auszusenden. Dies reduziert die Komplexität und die Kosten des sicherheitsgerichteten Steuerungssystems, da für den Anschluss mehrerer Sicherheitssensoren eine einzelne Sicherheitssensoreinheit verwendet werden kann.

Gemäß einer Ausführungsform umfasst das sicherheitsgerichtete Steuerungssystem eine weitere an den Feldbus angeschlossene Sicherheitsaktoreinheit. Die Programmiereinrichtung ist dabei dazu eingerichtet, über die Ausgabeschnittstelle durch die weitere Sicherheitsaktoreinheit ausführbare Sicherheitsreaktionen anzuzeigen, und über die Eingabeschnittstelle eine zusätzliche Benutzereingabe zu empfangen, wobei die zusätzliche Benutzereingabe der ausgewählten Sicherheitslinie eine durch die weitere Sicherheitsaktoreinheit ausführbare ausgewählte weitere Sicherheitsreaktion zuordnet.

Indem die Programmiereinrichtung dazu eingerichtet ist, Benutzereingaben zu empfangen, welche der Sicherheitslinie unterschiedliche Sicherheitsreaktionen der Sicherheitsaktoreinheit einerseits und der weiteren Sicherheitsaktoreinheit andererseits zuordnet, kann das sicherheitsgerichtete Steuerungssystem besonders flexibel konfiguriert werden. Beispielsweise können die Sicherheitsaktoreinheit und die weitere Sicherheitsaktoreinheit an unterschiedlichen Schutzbereichen der abgesicherten Anlage, beispielsweise an einer Materialzuführungsvorrichtung und an einer Produktausschleusvorrichtung, angeordnet sein, wobei in den unterschiedlichen Schutzbereichen unterschiedliche Gefährdungen auftreten. In diesem Fall können dann jeweils an die Gefährdungen angepasste Sicherheitsreaktionen für die einzelnen Schutzbereiche festgelegt werden, beispielsweise ein sicheres Stillsetzen für die unmittelbar gefährdete Materialzuführungsvorrichtung und ein Betrieb mit sicher reduzierter Geschwindigkeit für die nur mittelbar gefährdete Produktausschleusvorrichtung.

Das Konfigurieren der weiteren Sicherheitsaktoreinheit kann beispielsweise beim erstmaligen Anschluss der weiteren Sicherheitsaktoreinheit an den Feldbus durchgeführt werden, etwa bei einer nachträglichen Erweiterung des bereits die Sicherheitsaktoreinheit umfassenden Steuerungssystems. Auf diese Weise kann das Steuerungssystem einfach und flexibel um weitere Sicherheitsaktoreinheiten erweitert werden.

Gemäß einer Ausführungsform ist die Sicherheitsaktoreinheit dazu eingerichtet, eine für eine erste Sicherheitslinie hinterlegte Sicherheitsreaktion mit einer höheren Aktivierungspriorität auszuführen als eine für eine zweite Sicherheitslinie hinterlegte Sicherheitsreaktion. Damit wird bei gleichzeitiger Aktivierung der ersten und zweiten Sicherheitslinie die Sicherheitsreaktion mit der höheren Aktivierungspriorität, d. h. die für die erste Sicherheitslinie hinterlegte Sicherheitsreaktion, ausgeführt und Konflikte sicher aufgelöst. Die einzelnen Aktivierungsprioritäten können beispielsweise abhängig sein von einer Restgefährdung, welche auch beim Ausführen der Sicherheitsreaktion noch verbleibt. So kann eine Sicherheitsreaktion mit einer geringeren Restgefährdung, etwa ein sicheres Stillsetzen, mit einer höheren Aktivierungspriorität ausgeführt werden, als eine Sicherheitsreaktion mit einer höheren Restgefährdung, etwa ein Betrieb mit sicher begrenzter Geschwindigkeit.

Alternativ oder zusätzlich kann das Steuerungssystem dazu eingerichtet sein, ein erstes Linienaktivierungssignal der ersten Sicherheitslinie mit einer höheren Übertragungspriorität über den Feldbus zu übertragen als ein zweites Linienaktivierungssignal der zweiten Sicherheitslinie. Dadurch kann die Sicherheit in dem Steuerungssystem weiter erhöht werden. Die den einzelnen Linienaktivierungssignalen zugeordneten Prioritäten können beispielsweise aus den Aktivierungsprioritäten der Sicherheitsreaktionen abgeleitet werden, welche den einzelnen Sicherheitslinien zugeordnet sind. Ist der ersten Sicherheitslinie eine Sicherheitsreaktion mit höherer Aktivierungspriorität, beispielsweise ein sicheres Stillsetzen, zugeordnet und der zweiten Sicherheitslinie eine Sicherheitsreaktion mit geringerer Aktivierungspriorität, beispielsweise ein Betrieb mit sicher begrenzter Geschwindigkeit, so kann das Linienaktivierungssignal der ersten Sicherheitslinie mit einer höheren Übertragungspriorität übertragen werden als das Linienaktivierungssignal der zweiten Sicherheitslinie.

Gemäß einer Ausführungsform ist die Programmiereinrichtung dazu eingerichtet, über die Benutzerschnittstelle eine Verknüpfungsbenutzereingabe zu empfangen, wobei die Verknüpfungsbenutzereingabe die durch die Sicherheitsaktoreinheit ausführbare ausgewählte Sicherheitsreaktion einer logischen Verknüpfung der ausgewählten Sicherheitslinie mit einer weiteren ausgewählten Sicherheitslinie zuordnet. Die Programmiereinrichtung ist dazu eingerichtet, die logische Verknüpfung und die ausgewählte Sicherheitsreaktion als Sicherheitskonfiguration in der Sicherheitsaktoreinheit zu hinterlegen, und die Sicherheitsaktoreinheit ist dazu eingerichtet, die logische Verknüpfung bei Empfang des Linienaktivierungssignals der ausgewählten Sicherheitslinie und/oder der ausgewählten weiteren Sicherheitslinie eigenständig auszuwerten.

Durch eine logische Verknüpfung mehrerer Sicherheitslinien können auch komplexe Sicherheitsreaktionen realisiert werden. Die logische Verknüpfung kann beispielsweise eine UND-Verknüpfung, eine ODER-Verknüpfung oder dergleichen sein. Bei einer UND-Verknüpfung wird die ausgewählte Sicherheitsreaktion nur bei Aktivierung beider Sicherheitslinien, beispielsweise beim gleichzeitigen Öffnen einer Schutztür und Unterbrechen einer Lichtschranke, ausgeführt, während bei Aktivierung lediglich einer Sicherheitslinie keine Sicherheitsreaktion oder eine andere Sicherheitsreaktion ausgeführt wird.

Gemäß einer Ausführungsform umfasst das Steuerungssystem eine an den Feldbus angeschlossene nicht sichere Standardsteuereinheit, wobei die Standardsteuereinheit dazu eingerichtet ist, die Aktivierungssignale der Sicherheitslinien als Eingangsdaten zu empfangen und zu verarbeiten, und wobei in der Standardsteuereinheit alle für die Sicherheitsaktoreinheit ausgewählten Sicherheitsreaktionen hinterlegt sind. Die Standardsteuereinheit ist ferner dazu eingerichtet, die Sicherheitsaktoreinheit bei Empfang eines Linienaktivierungssignals einer aktivierten Sicherheitslinie gemäß der für die aktivierte Sicherheitslinie ausgewählten Sicherheitsreaktion zu steuern, und die Sicherheitsaktoreinheit ist dazu eingerichtet, im Rahmen des eigenständigen Ausführens der Sicherheitsreaktion das Steuern durch die Standardsteuereinheit eigenständig sicher zu überwachen.

Indem die Sicherheitsaktoreinheit nach Aktivierung der Sicherheitslinie durch die Standardsteuereinheit gesteuert wird, kann zur Ausführung der Sicherheitsreaktion auf die Ressourcen der Standardsteuereinheit, beispielsweise auf deren Logikeinheiten, zurückgegriffen werden und die Sicherheitsaktoreinheit verhältnismäßig einfach ausgebildet werden. Zur Überwachung des nicht fehlersicheren Steuerns der Sicherheitsaktoreinheit durch die Standardsteuereinheit kann die Sicherheitsaktoreinheit das getrennt von dem Standardmodul ausgeführte Sicherheitsmodul aufweisen.

Gemäß einer Ausführungsform weist das Steuerungssystem eine Mastereinheit auf, wobei die Mastereinheit dazu eingerichtet ist, einen Buszugriff auf den Feldbus nach dem Master-Slave-Verfahren zu steuern. Die Sicherheitsaktoreinheiten und/oder die Sicherheitssensoreinheiten sind als Slaveeinheiten an den Feldbus angeschlossen und das Steuerungssystem ist dazu eingerichtet, die Linienaktivierungssignale über den Feldbus im direkten Querverkehr ohne sicherheitsgerichtete Zwischenverarbeitung durch die Mastereinheit von den Sicherheitssensoreinheiten zu den Sicherheitsaktoreinheiten zu übertragen.

Mittels der Mastereinheit kann ein deterministischer Buszugriff und damit beispielsweise eine echtzeitfähige Datenübertragung über den Feldbus gewährleitstet werden. Indem die Linienaktivierungssignale ohne Zwischenverarbeitung durch die Mastereinheit übertragen werden, wird ein besonderes schnelles Auslösen der mit der aktivierten Sicherheitslinie verknüpften Sicherheitsreaktionen ermöglicht. Der direkte Querverkehr kann beispielsweise dadurch realisiert sein, dass die Sicherheitsaktoreinheiten, bzw. die Sicherheitsmodule der Sicherheitsaktoreinheiten, die Linienaktivierungssignale direkt aus von den Sicherheitssensoreinheiten befüllten Feldbustelegrammen auslesen. Alternativ kann der direkte Querverkehr auch ein Umkopieren der Linienaktivierungssignale aus durch die Sicherheitsaktoreinheiten befüllten Feldbustelegrammen in separate, von den Sicherheitsaktoreinheiten ausgelesene Feldbustelegramme umfassen, wobei das Umkopieren durch die Mastereinheit ohne weiteres Auslesen oder Auswerten der Linienaktivierungssignale erfolgt.

Der direkte Querverkehr kann auch mittels einer Publisher/Subscriber Kommunikation realisiert werden, bei der die Sicherheitssensoreinheiten die Linienaktivierungssignale dadurch über den Feldbus aussenden, dass sie sie zum Abruf durch die Sicherheitsaktoreinheiten bzw. durch deren Sicherheitsmodule bereitstellen, und bei der die Sicherheitsaktoreinheiten bzw. die Sicherheitsmodule die Linienaktivierungssignale dadurch direkt über den Feldbus empfangen, dass sie die Linienaktivierungssignale eigenständig von den Sicherheitssensoreinheiten abrufen.

Das Bereitstellen der Linienaktivierungssignale durch die Sicherheitssensoreinheiten und/oder das Abrufen der Linienaktivierungssignale durch die Sicherheitsaktoreinheiten kann beispielsweise zyklisch und/oder in deterministischen Zeitabständen erfolgen. Alternativ kann das Bereitstellen der Linienaktivierungssignale durch die Sicherheitssensoreinheiten auch ereignisgesteuert erfolgen, wobei ein das Bereitstellen auslösendes Ereignis beispielsweise eine Zustandsänderung eines über einen zugeordneten Sensoranschluss empfangenen Sensorsignals sein kann. Für den Querverkehr kann beispielsweise eine Publisher/Subscriber Kommunikation über UPC UA over TSN genutzt werden.

Ein Verfahren zum Betreiben eines sicherheitsgerichteten Steuerungssystems mit mindestens einer Sicherheitssensoreinheit und mindestens einer Sicherheitsaktoreinheit, welche über einen Feldbus miteinander verbunden sind, und mit einer Programmiereinrichtung, umfasst die Schritte gemäß Anspruch 13.

Das Verfahren kann insbesondere zum Betreiben des anspruchsgemäßen sicherheitsgerichteten Steuerungssystems verwendet werden. Insofern beziehen sich alle technischen Effekte und Ausführungsformen, welche im Zusammenhang mit dem anspruchsgemäßen sicherheitsgerichteten Steuerungssystem beschrieben werden, auch auf das anspruchsgemäße Verfahren und umgekehrt.

Die Erfindung wird nachfolgend anhand von Figuren erläutert. Dabei zeigen in jeweils schematischer Darstellung:
- Fig. 1: ein sicherheitsgerichtete Steuerungssystem;
- Fig. 2: eine erste Benutzerausgabe einer Programmiereinrichtung des Steuerungssystems;
- Fig. 3: eine zweite Benutzerausgabe der Programmiereinrichtung;
- Fig. 4: eine dritte Benutzerausgabe der Programmiereinrichtung;
- Fig. 5: eine vierte Benutzerausgabe der Programmiereinrichtung;
- Fig. 6: einen ersten Teil eines Verfahrens zum Betreiben des sicherheitsgerichteten Steuerungssystems; und
- Fig. 7: einen zweiten Teil des Verfahrens zum Betreiben des sicherheitsgerichteten Steuerungssystems.

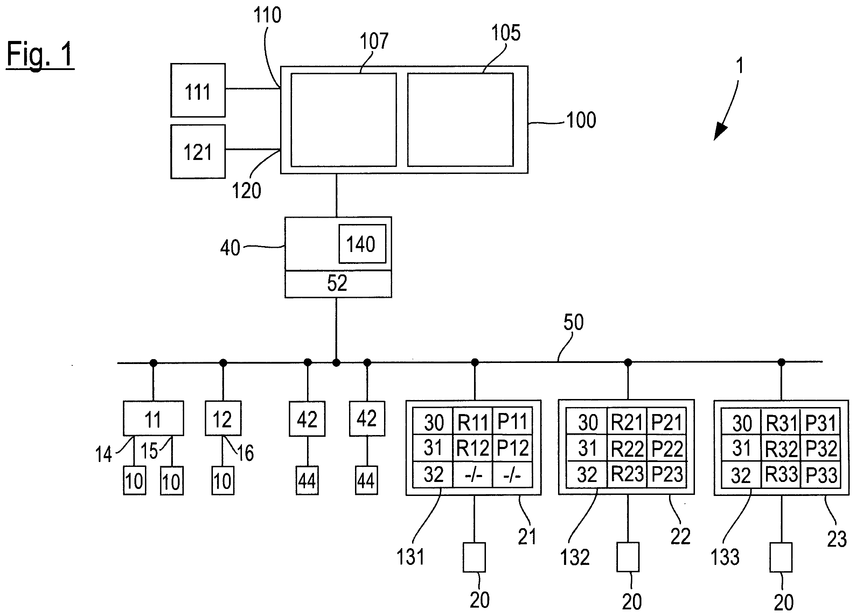

Fig. 1 zeigt ein sicherheitsgerichtetes Steuerungssystem 1 mit einer ersten Sicherheitssensoreinheit 11, einer zweiten Sicherheitssensoreinheit 12, einer ersten Sicherheitsaktoreinheit 21, einer zweiten Sicherheitsaktoreinheit 22, sowie einer dritten Sicherheitsaktoreinheit 23. Die Sicherheitssensoreinheiten 11, 12 und die Sicherheitsaktoreinheiten 21, 22, 23 sind über einen Feldbus 50 miteinander verbunden. Die erste Sicherheitssensoreinheit 11 umfasst einen ersten sicheren Sensoranschluss 14 und einen zweiten sicheren Sensoranschluss 15, an welche jeweils ein Sicherheitssensor 10 angeschlossen ist. Die zweite Sicherheitssensoreinheit 12 umfasst einen einzelnen dritten sicheren Sensoranschluss 16 mit einem daran angeschlossenen weiteren Sicherheitssensor 10. Über die Sicherheitsaktoreinheiten 21, 22, 23 ist jeweils ein Sicherheitsaktor 20 an den Feldbus 50 angebunden, wobei die Sicherheitsaktoren 20 jeweils als Antriebe ausgebildet sind.

Die an die erste Sicherheitssensoreinheit 11 angeschlossenen Sicherheitssensoren 10 dienen zur Absicherung eines ersten Schutzbereiches und der an die zweite Sicherheitssensoreinheit 12 angeschlossene Sicherheitssensor 10 dient der Absicherung eines zweiten Schutzbereiches. Innerhalb des ersten Schutzbereiches führen Maschinenteile eine gefahrbringende Bewegung aus, welche von dem an die erste Sicherheitsaktoreinheit 21 angeschlossenen Sicherheitsaktor 20 angetrieben werden. Innerhalb des zweiten Schutzbereichs führen Maschinenteile eine gefahrbringende Bewegung aus, die von den Sicherheitsaktoren 20 angetrieben werden, welche an die zweite und dritte Sicherheitsaktoreinheit 22, 23 angeschlossen sind.

Die erste Sicherheitssensoreinheit 11 ist dazu eingerichtet, ein erstes Linienaktivierungssignal zur Aktivierung einer ersten Sicherheitslinie 30 über den Feldbus 50 auszusenden, wenn der an den ersten Sensoranschluss 14 angeschlossene Sicherheitssensor 10 aktiviert wird, und ein zweites Linienaktivierungssignal zur Aktivierung einer zweiten Sicherheitslinie 31, wenn der an den zweiten Sensoranschluss 15 angeschlossene Sicherheitssensor 10 aktiviert wird. Analog ist die zweite Sicherheitssensoreinheit 12 dazu eingerichtet, ein drittes Linienaktivierungssignal zur Aktivierung einer dritten Sicherheitslinie 33 auszusenden, wenn der an den dritten Sensoranschluss 16 angeschlossene Sicherheitssensor 10 aktiviert wird.

Der an den ersten Sensoranschluss 14 der ersten Sicherheitssensoreinheit 11 angeschlossene Sicherheitssensor 10 ist als ein Drehgeber ausgebildet, welcher über den ersten Sensoranschluss 14 Sensordaten an die erste Sicherheitssensoreinheit 11 übermittelt, die eine Drehzahl eines in dem ersten Schutzbereich angeordneten Maschinenteils repräsentieren. Die erste Sicherheitssensoreinheit 11 führt eine fehlersichere Vorverarbeitung der Sensordaten des Drehgebers aus und überprüft die Sensordaten auf ein Überschreiten eines zulässigen Wertebereichs. Bei Überschreiten des zulässigen Wertebereichs aktiviert die erste Sicherheitssensoreinheit 11 die erste Sicherheitslinie, der der erste Sensoranschluss 14 zugeordnet ist.

Die an den zweiten und dritten Sensoranschluss 15, 16 angeschlossenen Sicherheitssensoren 10 sind jeweils als Schalter ausgebildet, welche jeweils ein binäres Sensorsignal über den zweiten bzw. dritten Sensoranschluss 15, 16 an die Sicherheitssensoreinheiten 11, 12 senden. Die zweite bzw. dritte Sicherheitssensoreinheit 11, 12 senden jeweils das zweite bzw. dritte Linienaktivierungssignal über den Feldbus 50 aus, sobald das über den zugeordneten Sensoranschluss 15, 16 empfangene binäre Sensorsignal eine Betätigung des entsprechenden Schalters signalisiert.

In der ersten Sicherheitsaktoreinheit 21 ist eine erste Sicherheitskonfiguration 131 hinterlegt, in der zweiten Sicherheitsaktoreinheit 22 eine zweite Sicherheitskonfiguration 132 und in der dritten Sicherheitsaktoreinheit 23 eine dritte Sicherheitskonfiguration 133. Die erste Sicherheitskonfiguration 131 ordnet der ersten und zweiten Sicherheitslinie 30, 31 jeweils durch die erste Sicherheitsaktoreinheit 21 ausführbare ausgewählte erste Sicherheitsreaktionen R11, R12 mit ersten Konfigurationsparametern P11, P12 zu und der dritten Sicherheitslinie 32 keine Sicherheitsreaktion der ersten Sicherheitsaktoreinheit 21. Die zweite und dritte Sicherheitskonfiguration 132, 133 ordnen den einzelnen Sicherheitslinien 30, 31, 32 durch die zweite Sicherheitsaktoreinheit 22 ausführbare ausgewählte zweite Sicherheitsreaktionen R21, R22, R23 mit zweiten Konfigurationsparametern P21, P22, P23 und durch die dritte Sicherheitsaktoreinheit 23 ausführbare ausgewählte dritte Sicherheitsreaktionen R31, R32, R33 mit dritten Konfigurationsparametern P31, P32, P33 zu.

An den Feldbus 50 sind ferner eine nicht sichere Standardsteuereinheit 40 und zwei nicht sichere Standardsensoreinheiten 42 angeschlossen. Dabei ist die Standardsteuereinheit 40 über eine Mastereinheit 52 an den Feldbus 50 angebunden. Die nicht sicheren Standardsensoreinheiten 42 dienen dem Anschluss nicht sicherer Standardsensoren 44 und erstellen auf Grundlage von Sensordaten der angeschlossenen Standardsensoren 44 sicherheitsunkritische Eingangsdaten, welche anschließend über den Feldbus 50 zur weiteren Verarbeitung an die Standardsteuereinheit 40 übertragen werden. Die Standardsteuereinheit 40 verarbeitet die Eingangsdaten gemäß einem in der Standardsteuereinheit 40 hinterlegten Standardsteuerprogramm 140 und erzeugt auf Grundlage der Eingangsdaten nicht sicherheitsgerichtete Ausgangsdaten. Mittels der nicht sicherheitsgerichteten Ausgangsdaten steuert die Standardsteuereinheit 40 in Fig. 1 nicht dargestellte nicht sichere Standardaktoreinheiten an.

Das Steuerungssystem 1 umfasst weiter eine Programmiereinrichtung 100, welche über die Standardsteuereinheit 40 und die Mastereinheit 52 an den Feldbus 50 angebunden und mit den Sicherheitsaktoreinheiten 21, 22, 23 verbunden ist. Die Programmiereinrichtung 100 umfasst ein Sicherheitsprogrammiermodul 105 zum Erstellen der Sicherheitskonfigurationen 131, 132, 133, sowie ein Standardprogrammiermodul 107 zum Erstellen des Standardsteuerprogramms 140. Ferner umfasst die Programmiereinrichtung 100 eine Ausgabeschnittstelle 110 mit einem daran angeschlossenen Anzeigegerät 111, sowie eine Eingabeschnittstelle 120 mit einem daran angeschlossenen Eingabegerät 121.

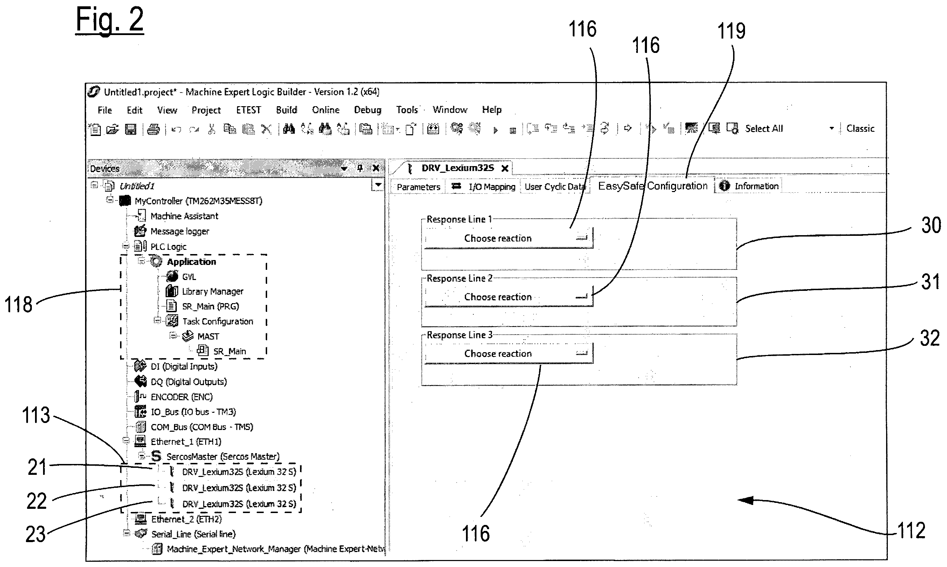

Fig. 2 zeigt eine über die Ausgabeschnittstelle 110 auf dem Anzeigegerät 111 dargestellte erste Benutzerausgabe der Programmiereinrichtung 100. Die dargestellte Benutzerausgabe umfasst einen Menübaum mit einer Standardprogrammierabfrage 118, über die die Programmierung des Standardsteuerprogramms 140 mittels des Standardprogrammiermoduls 107 auswählbar ist, und mit einer Sicherheitsaktorabfrage 113, in der die einzelnen Sicherheitsaktoreinheiten 21, 22, 23 gelistet und zum weiteren Konfigurieren mittels einer Benutzereingabe auswählbar sind.

Bei der in Fig. 2 gezeigten Darstellung ist die erste Sicherheitsaktoreinheit 21 ausgewählt und das Sicherheitsprogrammiermodul 105 der Programmiereinrichtung 100 stellt in einem Sicherheitsausgabebereich 112 eine mittels eines Reiters 101 auswählbare Sicherheitsprogrammierabfrage 119 dar, über die die erste Sicherheitskonfiguration 131 mittels des Sicherheitsprogrammiermoduls 105 erstellt werden kann. Analog stellt das Sicherheitsprogrammiermodul 105 der Programmiereinrichtung 100 bei Auswahl der zweiten oder dritten Sicherheitsaktoreinheit 22, 23 in der Sicherheitsaktorabfrage 113 jeweils mittels des Reiters 101 auswählbare Sicherheitsprogrammierabfragen für die zweite bzw. dritte Sicherheitsaktoreinheit 22, 23 dar, über die die zweite und dritte Sicherheitskonfiguration 132, 133 mittels des Sicherheitsprogrammiermoduls 105 erstellt werden kann. Über die weiteren in Fig. 2 dargestellten Reiter kann ein nicht sicheres Konfigurieren nicht sicherer Standardparameter der ausgewählten Sicherheitsaktoreinheit 21 ausgeführt werden.

Das Sicherheitsprogrammiermodul 105 der Programmiereinrichtung 100 stellt bei der Sicherheitsprogrammierabfrage 119 in dem Sicherheitsausgabebereich 112 die verfügbaren Sicherheitslinien 30, 31, 32 mit jeweils einer Sicherheitsreaktionsabfrage 116 dar, um ein Zuordnen jeweils einer durch die erste Sicherheitsaktoreinheit 21 ausführbaren Sicherheitsreaktion zu den einzelnen Sicherheitslinien 30, 31, 32 mittels einer Benutzereingabe zu ermöglichen. Die Sicherheitsreaktionsabfragen 116 sind jeweils als Auswahlmenüs dargestellt, welche mittels einer Benutzereingabe anwählbar sind.

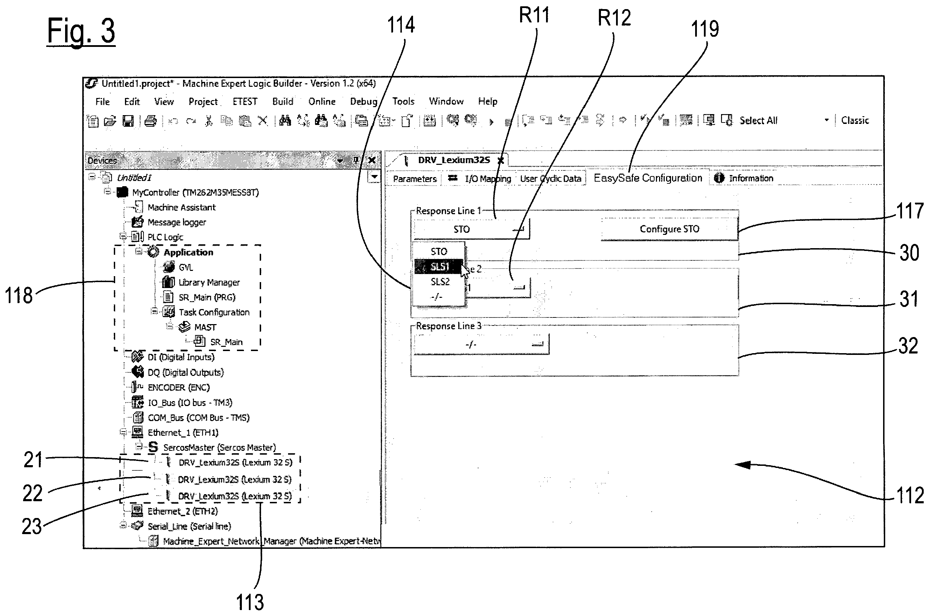

Fig. 3 zeigt eine zweite Benutzerausgabe, die über die Ausgabeschnittstelle 110 auf dem Anzeigegerät 111 der Programmiereinrichtung 100 dargestellt wird, nachdem das Sicherheitsprogrammiermodul 105 der Programmiereinrichtung 100 jeweils Benutzereingaben empfangen hat, welche als eine Auswahl der ersten Sicherheitslinie 30 eine erste Sicherheitsreaktion R11 der ersten Sicherheitsaktoreinheit 21, nämlich ein sicher abgeschaltetes Moment (STO) des angeschlossenen Antriebs 10, zuordnen und als eine weitere Auswahl der dritten Sicherheitslinie 32 keine Sicherheitsreaktion der ersten Sicherheitsaktoreinheit 21 zuordnen. Zugleich zeigt das Sicherheitsprogrammiermodul 105 der Programmiereinrichtung 100 in der zweiten Benutzerausgabe die durch die erste Sicherheitsaktoreinheit 21 ausführbaren Sicherheitsreaktionen 114, welche der zweiten Sicherheitslinie 31 zugeordnet werden können, in einer Auswahlliste an.

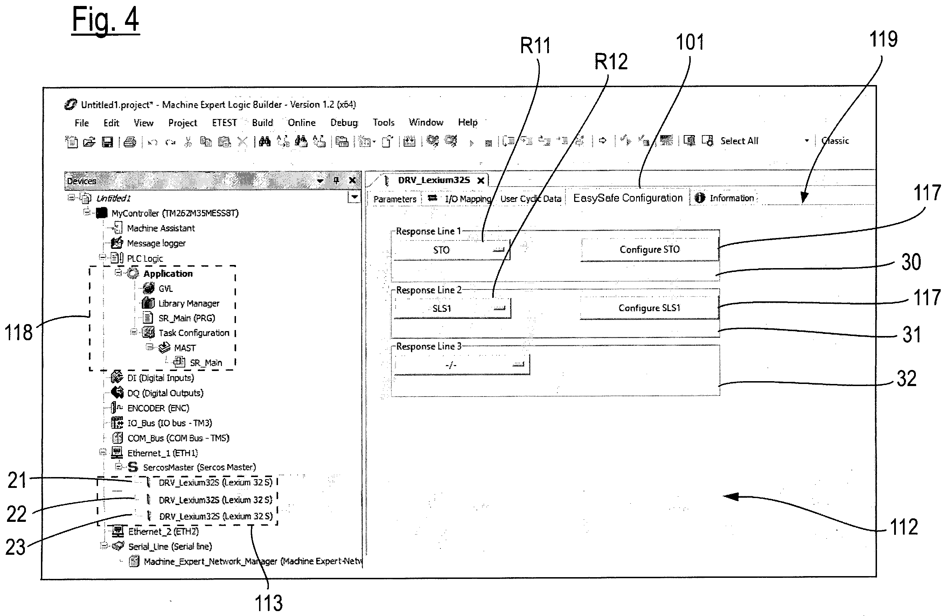

Fig. 4 zeigt eine dritte Benutzerausgabe, die über die Ausgabeschnittstelle 110 auf dem Anzeigegerät 111 der Programmiereinrichtung 100 dargestellt wird, nachdem das Sicherheitsprogrammiermodul 105 der Programmiereinrichtung 100 eine Benutzereingabe empfangen hat, welche der zweiten Sicherheitslinie 31 eine zweite Sicherheitsreaktion R12 der ersten Sicherheitsaktoreinheit 21, nämlich eine sicher begrenzte Geschwindigkeit (STO) des angeschlossenen Antriebs 10, zuordnet. Dabei stellt das Sicherheitsprogrammiermodul 105 für die beiden ausgewählten Sicherheitsreaktionen R11, R12 jeweils Parameterabfragen 117 zur Eingabe von Konfigurationsparametern der Sicherheitsreaktionen R11, R12 dar, welche als Auswahlmenüs ausgebildet sind.

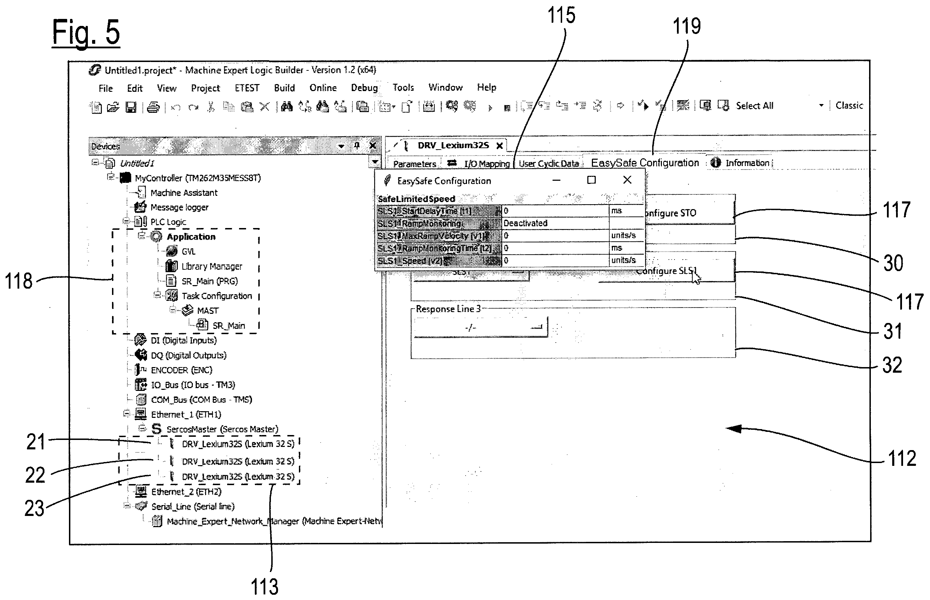

Fig. 5 zeigt eine über die Ausgabeschnittstelle 110 auf dem Anzeigegerät 111 dargestellte dritte Benutzerausgabe der Programmiereinrichtung 100 zur Parametrierung der zweiten Sicherheitsreaktion R12. In dem über die Parameterabfrage 117 dargestellten Auswahlmenü sind einzelne Konfigurationsparameter 115 der zweiten Sicherheitsreaktion R12 dargestellt, welche mittels einer Benutzereingabe veränderbar sind.

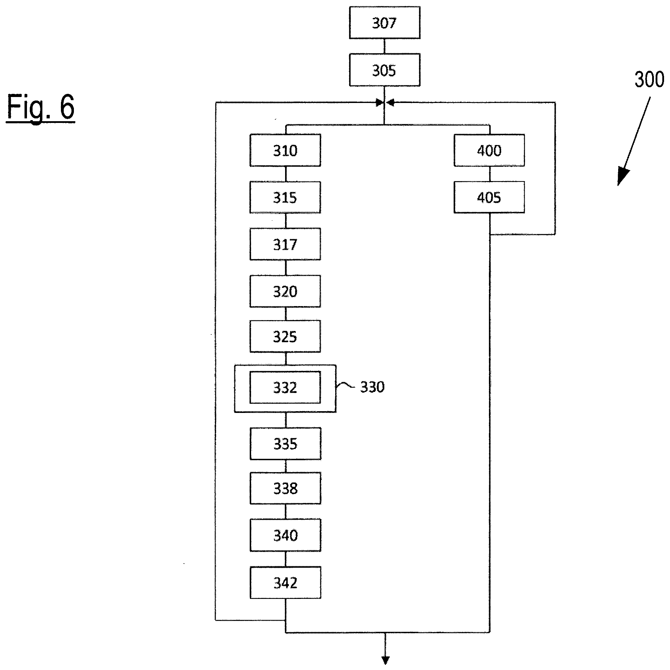

Fig. 6 zeigt einen ersten Teil eines Verfahrens 300 zum Betreiben des sicherheitsgerichteten Steuerungssystems 1, in welchem das Standardsteuerprogramm 140 programmiert wird und die Sicherheitskonfigurationen 131, 132, 133 der Sicherheitsaktoreinheiten 21, 22, 23 erstellt werden.

Das Verfahren 300 umfasst zunächst ein Zuordnen 307 der durch die Sicherheitssensoreinheiten 11, 12 bereitgestellten Sensoranschlüsse 14, 15, 16 zu den Sicherheitslinien 30, 31, 32 innerhalb der Sicherheitssensoreinheiten 11, 12. Anschließend umfasst das Verfahren 300 ein Erkennen 305 der Sicherheitssensoreinheiten 11, 12 und der hinterlegten Sicherheitslinien 30, 31, 32 über den Feldbus 50 durch die Programmiereinrichtung 100. Mittels einer Benutzereingabe erfolgt anschließend entweder eine Auswahl 310 des Konfigurierens der Sicherheitsaktoreinheiten 21, 22, 23 oder eine Auswahl 400 der Programmierung des Standardsteuerprogramms 140. Bei der Auswahl 400 der Programmierung des Standardsteuerprogramms 140 erfolgt ein Empfangen 405 von Benutzereingaben zur Programmierung des Standardsteuerprogramms 140. Anschließend kann erneut die Auswahl 310 zum Konfigurieren der Sicherheitsaktoreinheiten 21, 22, 23 oder die Auswahl 400 zum Programmieren des Standardsteuerprogramms 140 erfolgen.

Nach der Auswahl 310 zum Konfigurieren der Sicherheitsaktoreinheiten 21, 22, 23 erfolgt ein Empfangen 315 einer Benutzereingabe zum Auswählen der zu konfigurierenden Sicherheitsaktoreinheit 21, 22, 23 und ein Abrufen 317 von durch die ausgewählte Sicherheitsaktoreinheit 21, 22, 23 durchführbaren und in der ausgewählten Sicherheitsaktoreinheit 21, 22, 23 hinterlegten Sicherheitsreaktionen 114. Anschließend umfasst das Verfahren 300 ein Anzeigen 320 der verfügbaren Sicherheitslinien 30, 31, 32 und ein Anzeigen 325 der ausführbaren Sicherheitsreaktionen 114 in dem Sicherheitsausgabebereich 112. Sodann findet ein Empfangen 330 einer Benutzereingabe zum Zuordnen einer ausführbaren Sicherheitsreaktion 114 zu einer der verfügbaren Sicherheitslinien 30, 31, 32 statt. Dabei kann optional auch eine Verknüpfungsbenutzereingabe empfangen werden (332), welche zwei verfügbare Sicherheitslinien 30, 31, 32 logisch zu einer zusätzlichen Sicherheitslinie verknüpft, beispielsweise mittels einer UND- oder ODER-Verknüpfung.

Das Verfahren 300 umfasst ferner ein Empfangen 335 einer weiteren Benutzereingabe zur Zuordnung der Konfigurationsparameter 115 zu den ausgewählten Sicherheitsreaktionen 114. Anschließend erfolgt ein Überprüfen 338 auf eine vollständige Konfiguration der ausgewählten Sicherheitsaktoreinheit 21, 22, 23, wobei unter anderem überprüft wird, ob für jede verfügbare Sicherheitslinie 30, 31, 32 mittels einer Benutzereingabe eine Auswahl dahingehend getroffen wurde, ob und gegebenenfalls welche Sicherheitsreaktion 114 den einzelnen Sicherheitslinien 30, 31, 32 zugeordnet wird. Abschließend erfolgt ein Hinterlegen 340 der ausgewählten Sicherheitsreaktionen 114 als Sicherheitskonfiguration 131, 132, 133 in der ausgewählten Sicherheitsaktoreinheit 21, 22, 23, sowie ein Hinterlegen 342 der ausgewählten Sicherheitsreaktionen 114 in der Standardsteuereinheit 40.

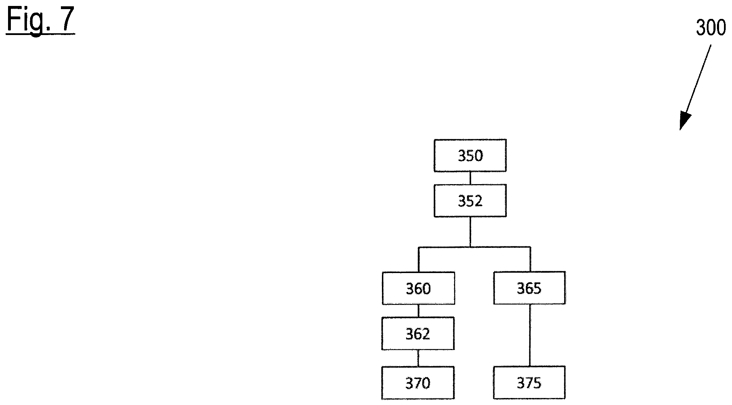

Fig. 7 zeigt einen zweiten Teil des Verfahrens 300, in welchem in einem Normalbetrieb des sicherheitsgerichteten Steuerungssystems 1 eine Sicherheitslinie 30, 31, 32 aktiviert wird (350). Anschließend wird ein der aktivierten Sicherheitslinie 30, 31, 32 zugeordnetes Linienaktivierungssignal über den Feldbus 50 ausgesendet (352), indem es durch die betreffende Sicherheitssensoreinheit 11, 12 zum Abruf über den Feldbus 50 bereitgestellt wird, und von den Sicherheitsaktoreinheiten 21, 22, 23 im direkten Querverkehr über den Feldbus 50 empfangen (360), indem des von den Sicherheitsaktoreinheiten 21, 22, 23 von der bereitstellenden Sicherheitssensoreinheit 11, 12 abgerufen wird.

In den einzelnen Sicherheitsaktoreinheiten 21, 22, 23 erfolgt anschließend ein optionales Auswerten 362 einer logischen Verknüpfung mehrerer Sicherheitslinien 30, 31, 32 und ein eigenständiges Ausführen 370 der der aktivierten Sicherheitslinie 30, 31, 32 zugeordneten Sicherheitsreaktion 114. Parallel erfolgt in der Standardsteuereinheit 40 ein Empfangen 365 des Linienaktivierungssignals, woraufhin die Standardsteuereinheit 40 die Sicherheitsaktoreinheiten 21, 22, 23 gemäß der jeweils hinterlegten Sicherheitsreaktionen 114 steuert (375) und das Steuern 375 durch die Standardsteuereinheit 40 im Rahmen des Ausführens 370 der Sicherheitsreaktion 114 in der Sicherheitsaktoreinheit 21, 22, 23 fehlersicher überwacht wird.

### Bezugszeichenliste

- 1: sicherheitsgerichtetes Steuerungssystem
- 10: Sicherheitssensoren
- 11: erste Sicherheitssensoreinheit
- 12: zweite Sicherheitssensoreinheit
- 14: erster Sensoranschluss
- 15: zweiter Sensoranschluss
- 16: dritter Sensoranschluss
- 20: Sicherheitsaktoren
- 21: erste Sicherheitsaktoreinheit
- 22: zweite Sicherheitsaktoreinheit
- 23: dritte Sicherheitsaktoreinheit
- 30: erste Sicherheitslinie
- 31: zweite Sicherheitslinie
- 32: dritte Sicherheitslinie
- 40: Standardsteuereinheit
- 42: Standardsensoreinheit
- 44: Standardsensor
- 50: Feldbus
- 52: Mastereinheit
- 100: Programmiereinrichtung
- 101: Reiter
- 105: Sicherheitsprogrammiermodul
- 107: Standardprogrammiermodul
- 110: Ausgabeschnittstelle
- 111: Anzeigegerät
- 112: Sicherheitsausgabebereich
- 113: Sicherheitsaktorabfrage
- 114: Sicherheitsreaktion
- 115: Konfigurationsparameter
- 116: Sicherheitsreaktionsabfrage
- 117: Parameterabfrage
- 118: Standardprogrammierabfrage
- 119: Sicherheitsprogrammierabfrage
- 120: Eingabeschnittstelle
- 121: Eingabegerät
- 131: erste Sicherheitskonfiguration
- 132: zweite Sicherheitskonfiguration
- 133: dritte Sicherheitskonfiguration
- 140: Standardsteuerprogramm
- 300: Verfahren
- 305: Erkennen von Sicherheitssensoreinheiten
- 307: Zuordnen von Sicherheitslinien
- 310: Auswahl einer Konfigurierung von Sicherheitsaktoreinheiten
- 315: Empfangen einer Benutzereingabe zum Auswählen einer Sicherheitsaktoreinheit
- 317: Abrufen ausführbarer Sicherheitsreaktionen
- 320: Anzeigen verfügbarer Sicherheitslinien
- 325: Anzeigen ausführbarer Sicherheitsreaktionen
- 330: Empfangen einer Benutzereingabe zur Zuordnung einer Sicherheitslinie
- 332: Empfang einer Verknüpfungsbenutzereingabe
- 335: Empfangen einer weiteren Benutzereingabe zur Zuordnung eines Konfigurationsparameters
- 338: Überprüfen auf vollständige Konfiguration
- 340: Hinterlegen der ausgewählten Sicherheitsreaktion in Sicherheitsaktoreinheit
- 342: Hinterlegen der ausgewählten Sicherheitsreaktion in Standardsteuereinheit
- 350: Aktivieren einer Sicherheitslinie
- 352: Aussenden eines Linienaktivierungssignals
- 360: Empfangen des Linienaktivierungssignals
- 362: Auswerten einer logischen Verknüpfung
- 365: Empfangen eines Linienaktivierungssignals in Standardsteuereinheit
- 370: Ausführen einer Sicherheitsreaktion
- 375: Steuern gemäß ausgewählter Sicherheitsreaktion
- 400: Auswahl Programmierung des Standardsteuerprogramms
- 405: Empfangen von Benutzereingaben zur Konfiguration eines Standardsteuerprogramms

## Patentansprüche

1. Sicherheitsgerichtetes Steuerungssystem (1) mit mindestens einer Sicherheitssensoreinheit (11, 12) und mindestens einer Sicherheitsaktoreinheit (21, 22, 23), welche über einen Feldbus (50) miteinander verbunden sind, und mit einer Programmiereinrichtung (100),
wobei durch die mindestens eine Sicherheitssensoreinheit (11, 12) Sensoranschlüsse (14, 15, 16) zur Anbindung von Sicherheitssensoren (10) an den Feldbus (50) bereitgestellt werden und die Sensoranschlüsse (14, 15, 16) Sicherheitslinien (30, 31, 32) zugeordnet sind,
wobei die Programmiereinrichtung (100) dazu eingerichtet ist, die verfügbaren Sicherheitslinien (30, 31, 32) über eine Ausgabeschnittstelle (110) einem Benutzer anzuzeigen,
wobei die Programmiereinrichtung (100) dazu eingerichtet ist, über eine Eingabeschnittstelle (120) eine Benutzereingabe des Benutzers zu empfangen, wobei die Benutzereingabe mindestens einer ausgewählten Sicherheitslinie (30, 31, 32) eine durch die Sicherheitsaktoreinheit (21, 22, 23) ausführbare ausgewählte Sicherheitsreaktion (114) zuordnet,
wobei die Programmiereinrichtung (100) dazu eingerichtet ist, die Zuordnung zwischen der ausgewählten Sicherheitslinie (30, 31, 32) und der ausgewählten Sicherheitsreaktion (114) in der Sicherheitsaktoreinheit (21, 22, 23) als Sicherheitskonfiguration (131, 132, 133) zu hinterlegen,
wobei die den einzelnen Sensoranschlüssen (14, 15, 16) zugeordneten Sicherheitslinien (30, 31, 32) durch die mindestens eine Sicherheitssensoreinheit (11, 12) mittels Aussendens von Linienaktivierungssignalen der einzelnen Sicherheitslinien (30, 31, 32) über den Feldbus (50) eigenständig aktivierbar sind,
wobei die Sicherheitsaktoreinheit (21, 22, 23) dazu eingerichtet ist, die Linienaktivierungssignale über den Feldbus (50) direkt von der mindestens einen Sicherheitssensoreinheit (11, 12) zu empfangen und
bei Empfang eines Linienaktivierungssignals einer aktivierten Sicherheitslinie (30, 31, 32) die für die aktivierte Sicherheitslinie (30, 31, 32) in der Sicherheitskonfiguration (131, 132, 133) hinterlegte Sicherheitsreaktion (114) eigenständig auszuführen,
wobei die Programmiereinrichtung (100) dazu eingerichtet ist, über die Eingabeschnittstelle (120) eine Benutzereingabe zur Auswahl der an den Feldbus (50) angeschlossenen Sicherheitsaktoreinheit (21, 22, 23) zu empfangen,
wobei die Programmiereinrichtung (100) dazu eingerichtet ist, dem Benutzer die verfügbaren Sicherheitslinien (30, 31, 32) und die durch die ausgewählte Sicherheitsaktoreinheit (21, 22, 23) ausführbaren Sicherheitsreaktionen (114) über die Ausgabeschnittstelle (110) anzuzeigen,
wobei die Programmiereinrichtung (100) dazu eingerichtet ist, die ausgewählte Sicherheitsreaktion (114) erst dann in der Sicherheitsaktoreinheit (21, 22, 23) zu hinterlegen, wenn die Programmiereinrichtung (100) zu jeder Sicherheitslinie (30, 31, 32) eine Benutzereingabe mit einer benutzerdefinierten Auswahl empfangen hat,
wobei die benutzerdefinierte Auswahl bestimmen kann, dass keine Sicherheitsreaktion erfolgen soll, die Sicherheitsaktoreinheit (21, 22, 23) also nicht mit der betreffenden Sicherheitslinie (30, 31, 32) verknüpft werden soll.

2. Sicherheitsgerichtetes Steuerungssystem (1) gemäß Anspruch 1,
wobei die durch die Sicherheitsaktoreinheit (21, 22, 23) ausführbaren Sicherheitsreaktionen (114) in der Sicherheitsaktoreinheit (21, 22, 23) hinterlegt sind und durch die Programmiereinrichtung (100) zur Auswahl durch den Benutzer abrufbar sind.

3. Sicherheitsgerichtetes Steuerungssystem (1) gemäß einem der vorhergehenden Ansprüche,
wobei die mittels der Benutzereingabe auswählbaren Sicherheitsreaktionen (114) der Sicherheitsaktoreinheit (21, 22, 23) als parametrierbare Programmbausteine hinterlegt sind.

4. Sicherheitsgerichtetes Steuerungssystem (1) gemäß einem der vorhergehenden Ansprüche,
wobei die Programmiereinrichtung (100) dazu eingerichtet ist, nach Auswahl der Sicherheitsreaktion (114) dem Benutzer über die Ausgabeschnittstelle (110) durch den Benutzer veränderbare Konfigurationsparameter (115) der ausgewählten Sicherheitsreaktion (114) anzuzeigen,
wobei die Programmiereinrichtung (100) dazu eingerichtet ist, über die Eingabeschnittstelle (120) eine weitere Benutzereingabe zu empfangen,
wobei die weitere Benutzereingabe der ausgewählten Sicherheitsreaktion (114) mindestens einen der angezeigten Konfigurationsparameter (115) zuweist.

5. Sicherheitsgerichtetes Steuerungssystem (1) gemäß einem der vorhergehenden Ansprüche,
wobei die Programmiereinrichtung (100) dazu eingerichtet ist, über die Eingabeschnittstelle (120) Benutzereingaben zur Programmierung eines nicht sicheren Standardsteuerprogramms (140) einer an den Feldbus (50) angeschlossenen nicht sicheren Standardsteuereinheit (40) zu empfangen, wobei die Programmiereinrichtung (100) dazu eingerichtet ist, die Programmierung des Standardsteuerprogramms (140) und eine Sicherheitskonfigurierung zur Erstellung der Sicherheitskonfiguration (131, 132, 133) mittels getrennter Programmiermodule (105, 107) auszuführen und/oder in getrennten Ausgabebereichen (112) über die Ausgabeschnittstelle (110) anzuzeigen.

6. Sicherheitsgerichtetes Steuerungssystem (1) gemäß einem der vorhergehenden Ansprüche,
wobei eine Zuordnung eines Sensoranschlusses (14, 15, 16) oder mehrerer Sensoranschlüsse (14, 15, 16) der Sicherheitssensoreinheit (11, 12) zu den Sicherheitslinien (30, 31, 32) in der Sicherheitssensoreinheit (11, 12) hinterlegt ist.

7. Sicherheitsgerichtetes Steuerungssystem (1) gemäß einem der vorhergehenden Ansprüche,
wobei die mindestens eine Sicherheitssensoreinheit (11, 12) eine Mehrzahl von sicheren Sensoranschlüssen (14, 15, 16) zum Anschluss von Sicherheitssensoren (10) aufweist,
wobei jedem Sensoranschluss (14, 15, 16) eine eigene Sicherheitslinie (30, 31, 32) zugeordnet ist,
wobei die Sicherheitssensoreinheit (11, 12) dazu eingerichtet ist, bei Betätigung der einzelnen Sicherheitssensoren (10) jeweils ein separates Linienaktivierungssignal über den Feldbus (50) auszusenden.

8. Sicherheitsgerichtetes Steuerungssystem (1) gemäß einem der vorhergehenden Ansprüche,
mit einer weiteren an den Feldbus (50) angeschlossenen Sicherheitsaktoreinheit (21, 22, 23),
wobei die Programmiereinrichtung (100) dazu eingerichtet ist, über die Ausgabeschnittstelle (110) durch die weitere Sicherheitsaktoreinheit (21, 22, 23) ausführbare Sicherheitsreaktionen (114) anzuzeigen,
wobei die Programmiereinrichtung (100) dazu eingerichtet ist, über die Eingabeschnittstelle (120) eine zusätzliche Benutzereingabe zu empfangen, wobei die zusätzliche Benutzereingabe der ausgewählten Sicherheitslinie (30, 31, 32) eine durch die weitere Sicherheitsaktoreinheit (21, 22, 23) ausführbare ausgewählte weitere Sicherheitsreaktion (114) zuordnet,
wobei sich die weitere Sicherheitsreaktion (114) von der für die Sicherheitsaktoreinheit (21, 22, 23) ausgewählten Sicherheitsreaktion (114) unterscheidet.

9. Sicherheitsgerichtetes Steuerungssystem (1) gemäß einem der vorhergehenden Ansprüche,
wobei die Sicherheitsaktoreinheit (21, 22, 23) dazu eingerichtet ist, eine für eine erste Sicherheitslinie (30, 31, 32) hinterlegte Sicherheitsreaktion (114) mit einer höheren Aktivierungspriorität auszuführen als eine für eine zweite Sicherheitslinie (30, 31, 32) hinterlegte Sicherheitsreaktion (114).

10. Sicherheitsgerichtetes Steuerungssystem (1) gemäß einem der vorhergehenden Ansprüche,
wobei die Programmiereinrichtung (100) dazu eingerichtet ist, über die Benutzerschnittstelle eine Verknüpfungsbenutzereingabe zu empfangen,
wobei die Verknüpfungsbenutzereingabe die durch die Sicherheitsaktoreinheit (21, 22, 23) ausführbare ausgewählte Sicherheitsreaktion (114) einer logischen Verknüpfung der ausgewählten Sicherheitslinie (30, 31, 32) mit einer weiteren ausgewählten Sicherheitslinie (30, 31, 32) zuordnet,
wobei die Programmiereinrichtung (100) dazu eingerichtet ist, die logische Verknüpfung und die ausgewählte Sicherheitsreaktion (114) als Sicherheitskonfiguration (131, 132, 133) in der Sicherheitsaktoreinheit (21, 22, 23) zu hinterlegen,
wobei die Sicherheitsaktoreinheit (21, 22, 23) dazu eingerichtet ist, die logische Verknüpfung bei Empfang des Linienaktivierungssignals der ausgewählten Sicherheitslinie (30, 31, 32) und/oder der ausgewählten weiteren Sicherheitslinie (30, 31, 32) eigenständig auszuwerten.

11. Sicherheitsgerichtetes Steuerungssystem (1) gemäß einem der vorhergehenden Ansprüche,
wobei das Steuerungssystem (1) eine an den Feldbus (50) angeschlossene nicht sichere Standardsteuereinheit (40) umfasst,
wobei die Standardsteuereinheit (40) dazu eingerichtet ist, die Aktivierungssignale der Sicherheitslinien (30, 31, 32) als Eingangsdaten zu empfangen und zu verarbeiten,
wobei in der Standardsteuereinheit (40) alle für die Sicherheitsaktoreinheit (21, 22, 23) ausgewählten Sicherheitsreaktionen (114) hinterlegt sind,
wobei die Standardsteuereinheit (40) dazu eingerichtet ist, die Sicherheitsaktoreinheit (21, 22, 23) bei Empfang eines Linienaktivierungssignals einer aktivierten Sicherheitslinie (30, 31, 32) gemäß der für die aktivierte Sicherheitslinie (30, 31, 32) ausgewählten Sicherheitsreaktion (114) zu steuern,
wobei die Sicherheitsaktoreinheit (21, 22, 23) dazu eingerichtet ist, im Rahmen des eigenständigen Ausführens der Sicherheitsreaktion (114) das Steuern durch die Standardsteuereinheit (40) eigenständig sicher zu überwachen.

12. Sicherheitsgerichtetes Steuerungssystem (1) gemäß einem der vorhergehenden Ansprüche,
wobei das Steuerungssystem (1) eine Mastereinheit (52) aufweist, wobei die Mastereinheit (52) dazu eingerichtet ist, einen Buszugriff auf den Feldbus (50) nach dem Master-Slave-Verfahren zu steuern,
wobei die Sicherheitsaktoreinheiten (21, 22, 23) und/oder die Sicherheitssensoreinheiten (11, 12) als Slaveeinheiten an den Feldbus (50) angeschlossen sind,
wobei das Steuerungssystem (1) dazu eingerichtet ist, die Linienaktivierungssignale über den Feldbus (50) im direkten Querverkehr ohne sicherheitsgerichtete Zwischenverarbeitung durch die Mastereinheit (52) von den Sicherheitssensoreinheiten (11, 12) zu den Sicherheitsaktoreinheiten (21, 22, 23) zu übertragen.

13. Verfahren (300) zum Betreiben eines sicherheitsgerichteten Steuerungssystems (1) mit mindestens einer Sicherheitssensoreinheit (11, 12) und mindestens einer Sicherheitsaktoreinheit (21, 22, 23), welche über einen Feldbus (50) miteinander verbunden sind, und mit einer Programmiereinrichtung (100),
wobei das Verfahren (300) die folgenden Schritte umfasst:
- Zuordnen (307) von durch die mindestens eine Sicherheitssensoreinheit (11, 12) bereitgestellten Sensoranschlüssen (14, 15, 16) zur Anbindung von Sicherheitssensoren (10) an den Feldbus (50) zu Sicherheitslinien (30, 31, 32);
- Empfangen einer Benutzereingabe zur Auswahl der an den Feldbus (50) angeschlossenen Sicherheitsaktoreinheit (21, 22, 23) über eine Eingabeschnittstelle (120) der Programmiereinrichtung (100);
- Anzeigen (325) der verfügbaren Sicherheitslinien (30, 31, 32) und der durch die ausgewählte Sicherheitsaktoreinheit (21, 22, 23) ausführbaren Sicherheitsreaktionen (114) über eine Ausgabeschnittstelle (110) der Programmiereinrichtung (100);
- Empfangen (330) einer Benutzereingabe über die Eingabeschnittstelle (120) der Programmiereinrichtung (100), wobei die Benutzereingabe mindestens einer ausgewählten Sicherheitslinie (30, 31, 32) eine durch die Sicherheitsaktoreinheit (21, 22, 23) ausführbare ausgewählte Sicherheitsreaktion (114) zuordnet;
- Hinterlegen (340) der Zuordnung zwischen der ausgewählten Sicherheitslinie (30, 31, 32) und der ausgewählten Sicherheitsreaktion (114) in der Sicherheitsaktoreinheit (21, 22, 23) als Sicherheitskonfiguration (131, 132, 133) mittels der Programmiereinrichtung (100);
- eigenständiges Aktivieren (350) einer Sicherheitslinie (30, 31, 32), die einem Sensoranschluss (14, 15, 16) der Sicherheitssensoreinheit (11, 12) zugeordnet ist, durch Aussenden eines Linienaktivierungssignals über den Feldbus (50) durch die Sicherheitssensoreinheit (11, 12);
- direktes Empfangen (360) des Linienaktivierungssignals von der Sicherheitssensoreinheit (11, 12) durch die Sicherheitsaktoreinheit (21, 22, 23) über den Feldbus (50);
- eigenständiges Ausführen (370) der für die aktivierte Sicherheitslinie (30, 31, 32) in der Sicherheitskonfiguration (131, 132, 133) hinterlegten Sicherheitsreaktion (114) durch die Sicherheitsaktoreinheit (21, 22, 23) bei Empfang des Linienaktivierungssignals,
wobei die ausgewählte Sicherheitsreaktion (114) erst dann in der Sicherheitsaktoreinheit (21, 22, 23) hinterlegt wird, wenn die Programmiereinrichtung (100) zu jeder Sicherheitslinie (30, 31, 32) eine Benutzereingabe mit einer benutzerdefinierten Auswahl empfangen hat, und
wobei die benutzerdefinierte Auswahl bestimmen kann, dass keine Sicherheitsreaktion erfolgen soll, die Sicherheitsaktoreinheit (21, 22, 23) also nicht mit der betreffenden Sicherheitslinie (30, 31, 32) verknüpft werden soll.

## Claims

1. A safety-directed control system (1) comprising at least one safety sensor unit (11, 12) and at least one safety actuator unit (21, 22, 23), which are connected to one another via a fieldbus (50), and a programming device (100),
wherein sensor connections (14, 15, 16) for connecting safety sensors (10) to the fieldbus (50) are provided by the at least one safety sensor unit (11, 12) and the sensor connections (14, 15, 16) are associated with safety lines (30, 31, 32),
wherein the programming device (100) is configured to display the available safety lines (30, 31, 32) to a user via an output interface (110),
wherein the programming device (100) is configured to receive a user input of the user via an input interface (120), with the user input associating a selected safety response (114), which is executable by the safety actuator unit (21, 22, 23), with at least one selected safety line (30, 31, 32), wherein the programming device (100) is configured to store the association between the selected safety line (30, 31, 32) and the selected safety response (114) in the safety actuator unit (21, 22, 23) as a safety configuration (131, 132, 133),
wherein the safety lines (30, 31, 32) associated with the individual sensor connections (14, 15, 16) can be independently activated by the at least one safety sensor unit (11, 12) by transmitting line activation signals of the individual safety lines (30, 31, 32) via the fieldbus (50),
wherein the safety actuator unit (21, 22, 23) is configured to receive the line activation signals via the fieldbus (50) directly from the at least one safety sensor unit (11, 12) and,
on the reception of a line activation signal of an activated safety line (30, 31, 32), to independently execute the safety response (114) stored for the activated safety line (30, 31, 32) in the safety configuration (131, 132, 133), wherein the programming device (100) is configured to receive, via the input interface (120), a user input for selecting the safety actuator unit (21, 22, 23) connected to the fieldbus (50),
wherein the programming device (100) is configured to display the available safety lines (30, 31, 32) and the safety responses (114) executable by the selected safety actuator unit (21, 22, 23) to the user via the output interface (110),
wherein the programming device (100) is configured to only store the selected safety response (114) in the safety actuator unit (21, 22, 23) when the programming device (100) has received a user input having a user-defined selection for each safety line (30, 31, 32),
wherein the user-defined selection can specify that no safety response is to take, i.e. that the safety actuator unit (21, 22, 23) is not to be linked to the respective safety line (30, 31, 32).

2. A safety-directed control system (1) according to claim 1,
wherein the safety responses (114) executable by the safety actuator unit (21, 22, 23) are stored in the safety actuator unit (21, 22, 23) and can be invoked by the programming device (100) for selection by the user.

3. A safety-directed control system (1) according to one of the preceding claims,
wherein the safety responses (114) of the safety actuator unit (21, 22, 23) selectable by means of the user input are stored as parameterizable program modules.

4. A safety-directed control system (1) according to any one of the preceding claims,
wherein the programming device (100) is configured to display, after the selection of the safety response (114), configuration parameters (115) of the selected safety response (114), which can be changed by the user, to the user via the output interface (110),
wherein the programming device (100) is configured to receive a further user input via the input interface (120),
wherein the further user input assigns at least one of the displayed configuration parameters (115) to the selected safety response (114).

5. A safety-directed control system (1) according to any one of the preceding claims,
wherein the programming device (100) is configured to receive, via the input interface (120), user inputs for programming a non-safe standard control program (140) of a non-safe standard control unit (40) connected to the fieldbus (50),
wherein the programming device (100) is configured to execute the programming of the standard control program (140) and a safety configuration for creating the safety configuration (131, 132, 133) by means of separate programming modules (105, 107) and/or to display them in separate output regions (112) via the output interface (110).

6. A safety-directed control system (1) according to any one of the preceding claims,
wherein an association of one sensor connection (14, 15, 16) or a plurality of sensor connections (14, 15, 16) of the safety sensor unit (11, 12) with the safety lines (30, 31, 32) is stored in the safety sensor unit (11, 12).

7. A safety-directed control system (1) according to any one of the preceding claims,
wherein the at least one safety sensor unit (11, 12) has a plurality of safe sensor connections (14, 15, 16) for connecting safety sensors (10),
wherein a separate safety line (30, 31, 32) is associated with each sensor connection (14, 15, 16),
wherein the safety sensor unit (11, 12) is configured to transmit a respective separate line activation signal via the fieldbus (50) on the actuation of the individual safety sensors (10).

8. A safety-directed control system (1) according to any one of the preceding claims,
comprising a further safety actuator unit (21, 22, 23) connected to the fieldbus (50),
wherein the programming device (100) is configured to display safety responses (114), which are executable by the further safety actuator unit (21, 22, 23), via the output interface (110),
wherein the programming device (100) is configured to receive an additional user input via the input interface (120), with the additional user input associating a selected further safety response (114), which is executable by the further safety actuator unit (21, 22, 23), with the selected safety line (30, 31, 32),
wherein the further safety response (114) differs from the safety response (114) selected for the safety actuator unit (21, 22, 23).

9. A safety-directed control system (1) according to any one of the preceding claims,
wherein the safety actuator unit (21, 22, 23) is configured to execute a safety response (114) stored for a first safety line (30, 31, 32) at a higher activation priority than a safety response (114) stored for a second safety line (30, 31, 32).

10. A safety-directed control system (1) according to any one of the preceding claims,
wherein the programming device (100) is configured to receive a link user input via the user interface,
wherein the link user input associates the selected safety response (114), which is executable by the safety actuator unit (21, 22, 23), with a logical link of the selected safety line (30, 31, 32) to a further selected safety line (30, 31, 32),
wherein the programming device (100) is configured to store the logical link and the selected safety response (114) as a safety configuration (131, 132, 133) in the safety actuator unit (21, 22, 23),
wherein the safety actuator unit (21, 22, 23) is configured to independently evaluate the logical link on the reception of the line activation signal of the selected safety line (30, 31, 32) and/or of the selected further safety line (30, 31, 32).

11. A safety-directed control system (1) according to any one of the preceding claims,
wherein the control system (1) comprises a non-safe standard control unit (40) connected to the fieldbus (50),
wherein the standard control unit (40) is configured to receive and process the activation signals of the safety lines (30, 31, 32) as input data, wherein all the safety responses (114) selected for the safety actuator unit (21, 22, 23) are stored in the standard control unit (40),
wherein the standard control unit (40) is configured to control the safety actuator unit (21, 22, 23) on the reception of a line activation signal of an activated safety line (30, 31, 32) in accordance with the safety response (114) selected for the activated safety line (30, 31, 32),
wherein the safety actuator unit (21, 22, 23) is configured to independently safely monitor the control by the standard control unit (40) as part of the independent execution of the safety response (114).

12. A safety-directed control system (1) according to any one of the preceding claims,
wherein the control system (1) has a master unit (52),
wherein the master unit (52) is configured to control a bus access to the fieldbus (50) in accordance with the master-slave method,
wherein the safety actuator units (21, 22, 23) and/or the safety sensor units (11, 12) are connected to the fieldbus (50) as slave units,
wherein the control system (1) is configured to transmit the line activation signals from the safety sensor units (11, 12) to the safety actuator units (21, 22, 23) via the fieldbus (50) in direct cross traffic without a safety-directed intermediate processing by the master unit (52).

13. A method (300) of operating a safety-directed control system (1) comprising at least one safety sensor unit (11, 12) and at least one safety actuator unit (21, 22, 23), which are connected to one another via a fieldbus (50), and a programming device (100),
wherein the method (300) comprises the following steps:
- associating (307) sensor connections (14, 15, 16), which are provided by the at least one safety sensor unit (11, 12), for connecting safety sensors (10) to the fieldbus (50) with safety lines (30, 31, 32);
- receiving a user input for selecting the safety actuator unit (21, 22, 23), which is connected to the fieldbus (50), via an input interface (120) of the programming device (100);
- displaying (325) the available safety lines (30, 31, 32) and the safety responses (114), which are executable by the selected safety actuator unit (21, 22, 23), via an output interface (110) of the programming device (100);
- receiving (330) a user input via the input interface (120) of the programming device (100), wherein the user input associates a selected safety response (114), which is executable by the safety actuator unit (21, 22, 23), with at least one selected safety line (30, 31, 32);
- storing (340) the association between the selected safety line (30, 31, 32) and the selected safety response (114) in the safety actuator unit (21, 22, 23) as a safety configuration (131, 132, 133) by means of the programming device (100);
- independently activating (350) a safety line (30, 31, 32), which is associated with a sensor connection (14, 15, 16) of the safety sensor unit (11, 12), by transmitting a line activation signal via the fieldbus (50) by the safety sensor unit (11, 12);
- directly receiving (360) the line activation signal from the safety sensor unit (11, 12) by the safety actuator unit (21, 22, 23) via the fieldbus (50); and
- independently executing (370) the safety response (114), which is stored for the activated safety line (30, 31, 32) in the safety configuration (131, 132, 133), by the safety actuator unit (21, 22, 23) on the reception of the line activation signal,
wherein the selected safety response (114) is only stored in the safety actuator unit (21, 22, 23) when the programming device (100) has received a user input having a user-defined selection for each safety line (30, 31, 32), and
wherein the user-defined selection can specify that no safety response is to take, i.e. that the safety actuator unit (21, 22, 23) is not to be linked to the respective safety line (30, 31, 32).

## Revendications

1. Système de commande orienté sécurité (1) comprenant au moins une unité de capteur de sécurité (11, 12) et au moins une unité d'actionneur de sécurité (21, 22, 23), qui sont reliées entre elles par un bus de terrain (50), et comprenant un dispositif de programmation (100),
dans lequel
ladite au moins une unité de capteur de sécurité (11, 12) fournit des connexions de capteur (14, 15, 16) pour connecter des capteurs de sécurité (10) au bus de terrain (50), et les connexions de capteur (14, 15, 16) sont associées à des lignes de sécurité (30, 31, 32),
le dispositif de programmation (100) est conçu pour afficher à un utilisateur les lignes de sécurité disponibles (30, 31, 32) via une interface de sortie (110),
le dispositif de programmation (100) est conçu pour recevoir, via une interface d'entrée (120), une entrée utilisateur de l'utilisateur, l'entrée utilisateur associant à au moins une ligne de sécurité sélectionnée (30, 31, 32) une réaction de sécurité sélectionnée (114) exécutable par l'unité d'actionneur de sécurité (21, 22, 23),
le dispositif de programmation (100) est conçu pour enregistrer en tant que configuration de sécurité (131, 132, 133) l'association entre la ligne de sécurité sélectionnée (30, 31, 32) et la réaction de sécurité sélectionnée (114) dans l'unité d'actionneur de sécurité (21, 22, 23),
les lignes de sécurité (30, 31, 32) associées aux connexions de capteur individuelles (14, 15, 16) peuvent être activées de manière autonome par ladite au moins une unité de capteur de sécurité (11, 12) en envoyant des signaux d'activation des lignes de sécurité individuelles (30, 31, 32) via le bus de terrain (50),
l'unité d'actionneur de sécurité (21, 22, 23) est conçue pour recevoir les signaux d'activation des lignes via le bus de terrain (50) directement depuis ladite au moins une unité de capteur de sécurité (11, 12) et est conçue pour, à la réception d'un signal d'activation d'une ligne de sécurité activée (30, 31, 32), exécuter de façon autonome la réaction de sécurité (114) enregistrée pour la ligne de sécurité activée (30, 31, 32) dans la configuration de sécurité (131, 132, 133),
le dispositif de programmation (100) est conçu pour recevoir, via l'interface d'entrée (120), une entrée utilisateur afin de sélectionner l'unité d'actionneur de sécurité (21, 22, 23) connectée au bus de terrain (50), le dispositif de programmation (100) est conçu pour afficher à l'utilisateur, via l'interface de sortie (110), les lignes de sécurité disponibles (30, 31, 32) et les réactions de sécurité (114) exécutables par l'unité d'actionneur de sécurité sélectionnée (21, 22, 23),
le dispositif de programmation (100) est conçu pour enregistrer la réaction de sécurité sélectionnée (114) dans l'unité d'actionneur de sécurité (21, 22, 23) uniquement après que le dispositif de programmation (100) a reçu une entrée utilisateur avec une sélection définie par l'utilisateur pour chaque ligne de sécurité (30, 31, 32),
la sélection définie par l'utilisateur peut déterminer qu'aucune réaction de sécurité ne doit avoir lieu, c'est-à-dire que l'unité d'actionneur de sécurité (21, 22, 23) ne doit pas être liée à la ligne de sécurité correspondante (30, 31, 32).

2. Système de commande orienté sécurité (1) selon la revendication 1, dans lequel les réactions de sécurité (114) exécutables par l'unité d'actionneur de sécurité (21, 22, 23) sont enregistrées dans l'unité d'actionneur de sécurité (21, 22, 23) et peuvent être appelées par le dispositif de programmation (100) pour être sélectionnées par l'utilisateur.

3. Système de commande orienté sécurité (1) selon l'une des revendications précédentes,
dans lequel les réactions de sécurité (114) de l'unité d'actionneur de sécurité (21, 22, 23) pouvant être sélectionnées par l'entrée utilisateur sont enregistrées sous forme de modules de programme paramétrables.

4. Système de commande orienté sécurité (1) selon l'une des revendications précédentes,
dans lequel le dispositif de programmation (100) est conçu pour afficher à l'utilisateur, après sélection de la réaction de sécurité (114), via l'interface de sortie (110), des paramètres de configuration (115), modifiables par l'utilisateur, de la réaction de sécurité sélectionnée (114),
le dispositif de programmation (100) est conçu pour recevoir une autre entrée utilisateur via l'interface d'entrée (120),
l'autre entrée utilisateur attribue à la réaction de sécurité sélectionnée (114) au moins l'un des paramètres de configuration affichés (115).

5. Système de commande orienté sécurité (1) selon l'une des revendications précédentes,
dans lequel le dispositif de programmation (100) est conçu pour recevoir via l'interface d'entrée (120) des entrées utilisateur pour la programmation d'un programme de commande standard non sécurisé (140) d'une unité de commande standard non sécurisée (40) connectée au bus de terrain (50), le dispositif de programmation (100) est conçu pour exécuter la programmation du programme de commande standard (140) et un paramétrage de sécurité pour la création de la configuration de sécurité (131, 132, 133) à l'aide de modules de programmation séparés (105, 107) et/ou pour les afficher dans des zones de sortie séparées (112) via l'interface de sortie (110).

6. Système de commande orienté sécurité (1) selon l'une des revendications précédentes,
dans lequel une association d'une connexion de capteur (14, 15, 16) ou de plusieurs connexions de capteur (14, 15, 16) de l'unité de capteur de sécurité (11, 12) aux lignes de sécurité (30, 31, 32) est enregistrée dans l'unité de capteur de sécurité (11, 12).

7. Système de commande orienté sécurité (1) selon l'une des revendications précédentes,
dans lequel ladite au moins une unité de capteur de sécurité (11, 12) comporte une pluralité de connexions de capteur de sécurité (14, 15, 16) pour connecter des capteurs de sécurité (10),
chaque connexion de capteur (14, 15, 16) est associée à une ligne de sécurité (30, 31, 32) propre,
l'unité de capteur de sécurité (11, 12) est conçue pour émettre un signal d'activation de ligne séparé via le bus de terrain (50) lors de l'actionnement des capteurs de sécurité individuels (10).

8. Système de commande orienté sécurité (1) selon l'une des revendications précédentes,
comprenant une autre unité d'actionneur de sécurité (21, 22, 23) connectée au bus de terrain (50),
le dispositif de programmation (100) étant conçu pour afficher, via l'interface de sortie (110), des réactions de sécurité (114) exécutables par l'autre unité d'actionneur de sécurité (21, 22, 23),
le dispositif de programmation (100) étant conçu pour recevoir, via l'interface d'entrée (120), une entrée utilisateur supplémentaire,
l'entrée utilisateur supplémentaire associe à la ligne de sécurité sélectionnée (30, 31, 32) une autre réaction de sécurité sélectionnée (114) exécutable par l'autre unité d'actionneur de sécurité (21, 22, 23),
l'autre réaction de sécurité (114) se distingue de la réaction de sécurité (114) sélectionnée pour l'unité d'actionneur de sécurité (21, 22, 23).

9. Système de commande orienté sécurité (1) selon l'une des revendications précédentes,
dans lequel l'unité d'actionneur de sécurité (21, 22, 23) est conçue pour exécuter une réaction de sécurité (114), enregistrée pour une première ligne de sécurité (30, 31, 32), avec une priorité d'activation supérieure à celle d'une réaction de sécurité (114) enregistrée pour une deuxième ligne de sécurité (30, 31, 32).

10. Système de commande orienté sécurité (1) selon l'une des revendications précédentes,
dans lequel le dispositif de programmation (100) est conçu pour recevoir, via l'interface utilisateur, une entrée utilisateur de liaison,
l'entrée utilisateur de liaison associe la réaction de sécurité sélectionnée (114), exécutable par l'unité d'actionneur de sécurité (21, 22, 23), à une liaison logique de la ligne de sécurité sélectionnée (30, 31, 32) avec une autre ligne de sécurité sélectionnée (30, 31, 32),
le dispositif de programmation (100) est conçu pour enregistrer la liaison logique et la réaction de sécurité sélectionnée (114) en tant que configuration de sécurité (131, 132, 133) dans l'unité d'actionneur de sécurité (21, 22, 23),
l'unité d'actionneur de sécurité (21, 22, 23) est conçue pour évaluer de façon autonome la liaison logique dès réception du signal d'activation de la ligne de sécurité sélectionnée (30, 31, 32) et/ou de l'autre ligne de sécurité sélectionnée.

11. Système de commande orienté sécurité (1) selon l'une des revendications précédentes,
dans lequel le système de commande (1) comprend une unité de commande standard non sécurisée (40) connectée au bus de terrain (50), l'unité de commande standard (40) est conçue pour recevoir et traiter les signaux d'activation des lignes de sécurité (30, 31, 32) en tant que données d'entrée,
toutes les réactions de sécurité (114) sélectionnées pour l'unité d'actionneur de sécurité (21, 22, 23) sont enregistrées dans l'unité de commande standard (40),
l'unité de commande standard (40) est conçue pour commander l'unité d'actionneur de sécurité (21, 22, 23), dès réception d'un signal d'activation d'une ligne de sécurité activée (30, 31, 32), conformément à la réaction de sécurité (114) sélectionnée pour la ligne de sécurité activée (30, 31, 32), l'unité d'actionneur de sécurité (21, 22, 23) est conçue pour, dans le cadre de l'exécution autonome de la réaction de sécurité (114), surveiller de manière autonome et sécurisée la commande assurée par l'unité de commande standard (40).

12. Système de commande orienté sécurité (1) selon l'une des revendications précédentes,
dans lequel le système de commande (1) comprend une unité maître (52), l'unité maître (52) est conçue pour commander l'accès au bus de terrain (50) selon le principe maître-esclave,
les unités d'actionneur de sécurité (21, 22, 23) et/ou les unités de capteur de sécurité (11, 12) sont connectées au bus de terrain (50) en tant qu'unités esclaves,
le système de commande (1) est conçu pour transmettre les signaux d'activation de ligne via le bus de terrain (50) en trafic direct, sans traitement intermédiaire orienté sécurité par l'unité maître (52), depuis les unités de capteur de sécurité (11, 12) aux unités d'actionneur de sécurité (21, 22, 23).

13. Procédé (300) de fonctionnement d'un système de commande orienté sécurité (1) comprenant au moins une unité de capteur de sécurité (11, 12) et au moins une unité d'actionneur de sécurité (21, 22, 23), qui sont reliées entre elles par un bus de terrain (50), et comprenant un dispositif de programmation (100),
le procédé (300) comprenant les étapes suivantes consistant à :
- associer (307) à des lignes de sécurité (30, 31, 32) des connexions de capteur (14, 15, 16), fournies par ladite au moins une unité de capteur de sécurité (11, 12), pour connecter les capteurs de sécurité (10) au bus de terrain (50) ;
- recevoir, via une interface d'entrée (120) du dispositif de programmation (100), une entrée utilisateur afin de sélectionner l'unité d'actionneur de sécurité (21, 22, 23) connectée au bus de terrain (50) ;
- afficher (325), via une interface de sortie (110) du dispositif de programmation (100), les lignes de sécurité disponibles (30, 31, 32) et les réactions de sécurité (114) exécutables par l'unité d'actionneur de sécurité sélectionnée (21, 22, 23) ;
- recevoir (330) une entrée utilisateur via l'interface d'entrée (120) du dispositif de programmation (100), l'entrée utilisateur permettant d'associer une réaction de sécurité sélectionnée (114), exécutable par l'unité d'actionneur de sécurité (21, 22, 23), à au moins une ligne de sécurité sélectionnée (30, 31, 32) ;
- enregistrer (340) dans l'unité d'actionneur de sécurité (21, 22, 23), en tant que configuration de sécurité (131, 132, 133), l'association entre la ligne de sécurité sélectionnée (30, 31, 32) et la réaction de sécurité sélectionnée (114) à l'aide du dispositif de programmation (100) ;
- activer de façon autonome (350) une ligne de sécurité (30, 31, 32), associée à une connexion de capteur (14, 15, 16) de l'unité de capteur de sécurité (11, 12), en envoyant un signal d'activation de ligne via le bus de terrain (50) à l'aide de l'unité de capteur de sécurité (11, 12) ;
- recevoir directement (360) le signal d'activation de ligne provenant de l'unité de capteur de sécurité (11, 12) à l'aide de l'unité d'actionneur de sécurité (21, 22, 23) via le bus de terrain (50) ;
- exécuter de façon autonome (370) la réaction de sécurité (114), enregistrée dans la configuration de sécurité (131, 132, 133) pour la ligne de sécurité activée (30, 31, 32), à l'aide de l'unité d'actionneur de sécurité (21, 22, 23) dès réception du signal d'activation de ligne,
dans lequel
la réaction de sécurité sélectionnée (114) est enregistrée dans l'unité d'actionneur de sécurité (21, 22, 23) uniquement après que le dispositif de programmation (100) a reçu une entrée utilisateur avec une sélection définie par l'utilisateur pour chaque ligne de sécurité (30, 31, 32), et
la sélection définie par l'utilisateur peut déterminer qu'aucune réaction de sécurité ne doit avoir lieu, c'est-à-dire que l'unité d'actionneur de sécurité (21, 22, 23) ne doit pas être liée à la ligne de sécurité correspondant (30, 31, 32).
